(19) Europäisches Patentamt
European Patent Office
Office européen des brevets

(11) EP 4 752 432 A2

(12) **EUROPEAN PATENT APPLICATION**

(43) Date of publication:
03.06.2026 Bulletin 2026/23

(21) Application number: 26156686.3

(22) Date of filing: 10.05.2023

(51) International Patent Classification (IPC):
*F21V 5/00* (2018.01)

(52) Cooperative Patent Classification (CPC):
**G08G 1/005; F21V 5/007; F21V 5/08; G08G 1/052; G08G 1/164; G08G 1/166;** F21S 8/086; F21W 2131/103; F21Y 2105/10; F21Y 2115/10; G02B 19/0066

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 10.05.2022 NL 2031825
15.09.2022 NL 2033046

(62) Document number(s) of the earlier application(s) in
accordance with Art. 76 EPC:
**23725712.6 / 4 523 194**

(71) Applicant: Schreder S.A.
1190 Bruxelles (Brussels) (BE)

(72) Inventors:
• VINCZE, Zsolt
2084 Pilisszentivan (HU)
• WITCZAK, John
4000 Liege (BE)
• WINANDY, Nicolas
4000 Liege (BE)
• CAPRARA, Roxane
4000 Liege (BE)

(74) Representative: Arnold & Siedsma
Bezuidenhoutseweg 57
2594 AC The Hague (NL)

Remarks:
•A request for correction of the description has been filed pursuant to Rule 139 EPC. A decision on the request will be taken during the proceedings before the Examining Division (Guidelines for Examination in the EPO, A-V, 3.).
•This application was filed on 05-02-2026 as a divisional application to the application mentioned under INID code 62.

(54) **WARNING LIGHT SYSTEM AND LIGHT-SHAPING MODULE**

(57) An optical unit configured for outputting a strip light pattern is provided. The optical unit compries at least one lens element, wherein a lens element thereof is provided with an inner surface having an anterior portion and a posterior portion seen in a first direction of the lens element and an outer surface having an anterior portion and a posterior portion seen in the first direction of the lens element, said inner and outer surface being located on opposite sides of the lens element. The inner surface is an at least partially convex surface delimiting a cavity configured to accommodate a lighting element; wherein the inner surface comprises in the posterior portion thereof a substantially flat surface area; and wherein the outer surface comprises a convex surface comprising in the posterior portion thereof a substantially bulged portion bulging along a first light direction substantially perpendicular to the flat surface area of the inner surface, the bulged portion of the outer surface being configured to focus the light rays emitted from the lighting element in said first light direction.

FIG. 10D

EP 4 752 432 A2

**Description**

**FIELD OF INVENTION**

The field of the invention relates to light systems and optical modules, in particular indoor, outdoor or industrial traffic surface luminaire systems and optical modules, and more in particular traffic surface luminaire systems, which can issue warning signals to warn traffic surface users against danger situations.

**BACKGROUND**

Severe traffic accidents happen much more frequently in a dark environment than in a well-lit environment. While providing a dangerous location (*e.g.* pedestrian crossing, bus stop, dangerous turn, the entrance to a city, a limited speed zone, a work zone) with a lighting system dedicated for that location definitively improves the safety of users, further improvements are needed to increase users' attention to the danger of the location. In particular, even when well-lit, pedestrian crossings remain for example dangerous areas for pedestrians, as car drivers may get accustomed to the constant illumination along their travel. In warehouses, where visibility may be limited, crossings between aisles are also dangerous locations and accidents may happen even in well-lit environments, due to the poor visibility, *e.g.* blind corners at the ends of aisles, which could raise the risk of a forklift striking a pedestrian.

While modern luminaires, such as luminaires equipped with LED optical elements, are becoming better at illuminating open ways such as traffic surfaces in an efficient, cheap, and ecological manner, current lighting systems lack the ability to simultaneously illuminate the traffic surface while warning users of potential dangers.

**SUMMARY**

The object of embodiments of the invention is to provide an optical unit capable of warning users of a traffic surface such as a road, of a potential danger in the vicinity of the traffic surface, increasing thus the safety of the users.

According to an aspect of the invention, there is provided an optical unit configured for outputting a strip light pattern. The optical unit comprising at least one lens element, wherein a lens element thereof is provided with an inner surface having an anterior portion and a posterior portion seen in a first direction x of the lens element and an outer surface having an anterior portion and a posterior portion seen in the first direction x of the lens element, said inner and outer surface being located on opposite sides of the lens element. The inner surface is an at least partially convex surface delimiting a cavity configured to accommodate a lighting element. The inner surface comprises in the posterior portion thereof a substantially flat surface area. The outer surface comprises a convex surface comprising in the posterior portion thereof a substantially bulged portion bulging along a first light direction D1 substantially perpendicular to the flat surface area of the inner surface, the bulged portion of the outer surface being configured to focus the light rays emitted from the lighting element in said first light direction.

In other words, the optical unit, *e.g.* a lens plate comprising several lens elements, is configured to shape the light rays emitted from lighting elements, *e.g.* LED lighting elements which may be placed in the cavities delimited by the lens elements. Because the inner surface has a substantially flat surface, the light rays emitted towards this flat surface are slightly deviated into the first direction by said surface. Additionally, the bulge portion of the outer surface, which is configured to focus the light rays in said first direction, also has a focusing property. The optical unit, which comprises a combination of these two features, is therefore configured such that the light emitted by the lighting elements is shaped in the first direction and may be used to form a substantially focused light pattern, *e.g.* a strip light pattern. Such optical unit may hence be used in luminaires to issue light warnings adapted to the situation.

Preferably, the substantially flat surface area has a radius of curvature which is larger than 10cm, preferably larger than 20cm, more preferably larger than 50cm. Such flatness contributes to the generation of the strip light pattern.

Preferably, the substantially bulged portion has a radius of curvature which is smaller than 10cm, preferably smaller than 5cm, more preferably smaller than 4cm, e.g. smaller than 2 cm.

Preferably, seen in a sagittal plane xz through the cavity extending in the first direction x, a lens area between in the inner surface and the outer surface in the posterior portion is at least 1.5 times higher than a lens area between in the inner surface and the outer surface in the anterior portion.

Preferably, a radius of curvature of the bulged portion is smaller than a radius of curvature of the outer surface in the anterior portion and smaller than a radius of curvature of the inner surface in the anterior portion.

Preferably, the substantially flat surface area extends over at least 15%, more preferably at least 20%, even more preferably at least 25 % of a maximum width of the cavity measured in a second direction y perpendicular on the first direction x.

Preferably, the profiles of the convex surface of the outer surface, as seen in a sagittal plane xz extending in the first direction x, are substantially identical over at least 15%, more preferably at least 20%, even more preferably at least 25 % of a maximum width of the lens element measured in a second direction y perpendicular on the first direction x. In this way, the light emitted from a lighting element may be shaped in a light pattern which may extend in a coronal direction, creating thus an elongated light pattern.

Preferably, the inner surface has a first side portion and a second side portion seen in a second direction y perpendicular on the first direction x, and the outer surface has a first side portion and a second side portion seen in the second direction; wherein, seen in a coronal plane yz extending in the second direction, the first side portion of the inner and outer surface is different from the second side portion of the inner and outer surface and configured for orienting the light into a coronal light direction D3. In this way, the light emitted by lighting elements, *e.g.* LED lighting elements which may be placed in the cavities delimited by the lens elements, is shaped in the third direction and may be used to form a light pattern, *e.g.* a strip light pattern, that is substantially focused in the coronal direction, *e.g.* is limited to a given lane. Such optical unit may hence be used in luminaires to issue light warnings adapted to the situation.

Preferably, seen in a coronal plane yz through the cavity extending in the second direction y, a lens area between in the inner surface and the outer surface in the first side portion is at least 1.5 times higher than a lens area between in the inner surface and the outer surface in the second side portion.

Preferably, seen in a coronal plane yz through the cavity, the radius of curvature of the outer surface of the first side portion is at least 5 times smaller, preferably at least 10 times smaller than the radius of curvature of the inner surface of the first side portion, measured where the coronal light direction D3 crosses the inner and the outer surface.

In a preferred embodiment, the inner surface bulges in the anterior portion, along a second direction D2. In this way, the light emitted in the second direction from a lighting element, *e.g.* which may be disposed in the cavity delimited by the inner surface may be deviated such as to disperse the light rays and avoid that they propagate in this second direction. This has the advantage of decreasing the portion of the light that exits the optical unit in the second direction D2, thereby increasing the proportion of the light that exits the optical unit in the first direction D1 and therefore increasing the contrast of the strip. Alternatively or in addition, the inner surface may comprise an opaque or diffusing surface in the anterior portion, facing the second direction D2.

According to a further aspect there is provided a luminaire head comprising an optical unit according to any of the embodiments disclosed above for emitting a strip light pattern, and an additional optical unit for outputting an additional light pattern different from the strip light pattern.

According to an example that is not claimed, there is a provided a lighting system for lighting a traffic surface which comprises at least one luminaire and at least one sensor configured for sensing data related to an event in the vicinity of the traffic surface and/or a receiver for receiving data related to an event in the vicinity of the traffic surface. Each luminaire comprises at least one optical unit and a controller that is configured for controlling the at least one optical unit. The lighting system is configured for determining the occurrence of an event in the vicinity of and/or on the traffic surface based on the sensed data and/or the received data. The controller is further configured for controlling the light output of the at least one optical unit according to a first light configuration when the occurrence of an event has been determined. In the first light configuration, at least one strip light pattern is formed on the traffic surface. The strip light pattern extends in a width direction which is substantially perpendicular to a predetermined direction of the traffic surface. In particular a predetermined direction of the traffic surface may be the travel direction of a lane of the traffic surface.

In other words, the lighting system is configured to form a strip light pattern when the occurrence of an event is determined in the vicinity of and/or on the traffic surface. The strip light pattern extends in a width direction of the traffic surface, wherein said width direction is a direction substantially perpendicular to the travel direction of a lane of the traffic surface. Because the light pattern formed upon occurrence of an event has the shape of a strip and because a large portion of the light is contained in a relatively narrow band, the strip light pattern is well identifiable as a warning signal, in particular compared to regular lighting. Typically, a strip or a line materializes a limit. Lines are typical traffic surface markings, which when perpendicular to the travel direction symbolize a danger or an interdiction. Such a line may remind a traffic surface user, i.e. a driver, of a stop line and may thus prompt the user to adapt his behavior, for instance to reduce the speed of the vehicle. In this way, the safety of users in the vicinity of the traffic surface is increased.

The controller of the at least one luminaire may further be configured for receiving information from the at least one sensor and/or from the receiver. For example, the controller may be configured for determining the occurrence of an event in the vicinity of and/or on the traffic surface based on the sensed and/or received data. Alternatively the detection of the occurrence of an event may be performed at sensor-level and/or at receiver level. Concerning that aspect, application PCT/EP2021/084638, PCT/EP2021/084631, PCT/EP2018/084516, PCT/EP2019/056713, PCT?EP2019/0774380, PCT/EP2020/082269, PCT/EP2022/056270 and PCT?EP2022/071401, are hereby incorporated by reference. Thus, the occurrence of an event may be determined by the system, and for example by the controller, from the sensed data and/or from the received data, wherein for example the received data may originate from another luminaire in the system or from a database like a traffic database connected to the system. As already mentioned, the determination of the occurrence of an event may additionally or alternatively be done at the sensor level and/or at the receiver level, in which case, the receiving information received by the controller already contains information on the occurrence

of the event and the controller does hence not need processing means dedicated to the determination of the event.

**[0021]** In the context of the invention, the traffic surface may correspond to any space intended to sustain vehicular and/or pedestrian traffic, such as a road surface ((sub)urban streets or boulevards, highways, countryside traffic surfaces or paths, etc.), a biking or skating surface (bikeways, skateparks, ways dedicated to light electric vehicles (LEVs), micro-EVs, etc.), a pedestrian surface (public places, markets, parks, pathways, sidewalks, zebra crossings, etc.), a railway surface (railways tracks for trams, trains, etc.), an aerial surface (airways for drones, unmanned aerial vehicles (UAVs), etc.), paths in work zones, industrial traffic surfaces, warehouse paths, warehouses walkways, or a water surface (waterways for boats, jet skis, etc.). Typically the traffic surface (for instance a road) is travelled along its length by a traffic surface user (for instance a car driver) and has a width that needs to be crossed by non-users of the traffic surface (for instance a pedestrian).

**[0022]** In the following, the occurrence of an event is an instance where a situation, *i.e.* an event, arises. Events on the traffic surface and/or in the vicinity of the traffic surface include all sorts of situations that could lead to danger for the traffic surface user. For example, the presence of a boulder on a road, the presence of a static vehicle on the road (*e.g.* a vehicle that suffered an accident, a vehicle breakdown), the presence of heavy traffic on the road, the presence of a pedestrian (*e.g.* crossing the road on a zebra-crossing), the presence of a work zone, are some examples of events on the traffic surface that could lead to danger for the traffic surface user (*e.g.* the driver of a vehicle that uses the road, the pedestrian crossing the road). The event may also be related to the state of the traffic surface itself or of the conditions surrounding the traffic surface. For example, the traffic surface may be wet, the visibility on the traffic surface me be low (*e.g.* due to fog, due to rain), there may be damages to the traffic surface (*e.g.* due to an earthquake, due to flooding), the traffic surface may have changed direction overtime. The event may also be related to the behaviour of the user of the traffic surface, for example, a driver driving in the wrong direction, a driver driving above the speed limit or too much below the speed limit, a vehicle arriving in a work zone, a vehicle arriving at a dangerous turn, a vehicle arriving at a crossing of roads, a driver turning at a crossing while cutting of a bicycle. The event may also be related to a situation in the vicinity of the traffic surface, for example, a pedestrian or a cyclist willing to cross a traffic surface, a herd of animals approaching the traffic surface, the presence of a working zone in the vicinity of the road, the presence of a static or moving vehicle in the vicinity of the road, a parked vehicle. The previous lists are not exhaustive, and a skilled person would understand that any dangerous situation, *i.e.* any event, on the traffic surface and/or in the vicinity of the traffic surface that could lead the traffic surface user to a dangerous situation may be understood as an event.

**[0023]** According to a non-claimed example, an Isolux line of the controlled light output of an optical unit substantially forming the strip light pattern is contained within a minimum area enclosing rectangle having a length and a width smaller than said length, said length extending longitudinally at least across a portion of a width of the traffic surface. In this way, properties of the light strip pattern may be defined in a normalized manner irrespective of the flux or the height of the luminaire. Preferably the Isolux line has a value of at least 100 lux, more preferably of at least 150 lux, even more preferably of at least 190 lux.

**[0024]** It is noted that by minimum area enclosing rectangle is meant the rectangle having the minimum surface while still enclosing the desired Isolux line. It should also be noted that the Isolux lines are meant in the present application as the locus of points that have the same illuminance values on standardized Isolux diagrams. Standardized Isolux diagrams corresponding to a particular luminaire are calculated for a hypothetical total luminous flux of 1000 lumens and at a distance of 1 meter of said luminaire. These diagrams are hence a standardized way to represent the shape of the light emitted from said luminaire. In order to find the actual illuminance value $E_{real}$ (in lux) of a particular point on the ground, a conversion factor has to be applied to the value $\hat{E}_{isolux}$ (without units) read off the Isolux diagram. This conversion factor depends on the actual flux of the lamp $\Phi$ in klm (kilolumens) and the mounting height of the luminaire $H$ (meters) in the following manner:

$$E_{real} = \hat{E}_{isolux} \frac{\Phi}{H^2}$$

**[0025]** According to a non-claimed example, the strip light pattern has an average (horizontal) illuminance and/or a uniformity of (horizontal) illuminance adapted to be perceived by a traffic surface user as a strip of light with substantially defined edges at ground level. In this way, a clear strip with good visibility may be achieved. Illuminance describes the measurement of the amount of light falling onto (illuminating) and spreading over a specified area. Horizontal illuminance describes the measurement of the amount of light falling onto (illuminating) and spreading over a specified horizontal area, like a ground surface which would be substantially flat. Illuminance values are measured in lux. Uniformity is the ratio between the minimum illuminance to the maximum illuminance in a specified area. Preferably, the strip light pattern has a uniformity of (horizontal) illuminance of at least 30%, preferably at least 40%, more preferably at least 50%. Further the light output of the at least one optical unit forming the strip light pattern is such that at least 70%, preferably at least 80%, of said light output falls within (the area of) the strip light pattern. The combination of a high percentage of the light output of the

optical unit forming the light strip pattern and a predetermined uniformity within the light strip pattern contribute to forming a well-lit strip of light. In particular the strip of light may have substantially defined edges which a traffic surface user would perceive as an unambiguous strip on the traffic surface. It is noted that reflective paint of the traffic surface may further be used in combination to highlight further the strip on the traffic surface.

According to a non-claimed example, the strip light pattern has an average (horizontal) illuminance at ground level at least 3 times, more preferably at least 4 times, higher than the average (horizontal) illuminance at ground level in an area at the immediate proximity of the strip light pattern. In this way, contrast between the strip on the traffic surface with the surrounding (traffic surface) lighting may be achieved. The considerations at stake for the contrast are similar to the ones applicable for the lighting of a pedestrian crossing. A skilled person would thus envisage to adapt the average (horizontal) illuminance (and optionally uniformity) to the type of lighting environment (type of traffic surface, national lighting norms) to obtain a suitable contrast as it is generally known for a pedestrian crossing.

According to a non-claimed example, the strip light pattern has a width which is a function of the height of the luminaire, preferably the strip light pattern has width of substantially less than 2 meters for a height of more than 3 meters.

According to a non-claimed example, the strip light pattern used at a zebra-crossing has a width of less than 50 % of the width of the zebra-crossing, preferably less than 25% of the width of the zebra-crossing.

According to a non-claimed example, the length of the minimum enclosing rectangle may be at least 1,5 times as long as the width thereof, preferably at least 2 times as long as the width thereof, more preferably at least 2.5 times as long as the width thereof, even more preferably at least 3 times as long as the width thereof, e.g. at least 4 times as long as the width thereof. In this way, since a large portion of the light intensity is contained in a relatively narrow but long band, the visibility of the warning signal may be high, which allows to increase the safety of the traffic surface users.

Preferably, when looking at isolux lines of the controlled light output of the optical unit substantially forming the strip light pattern, the isolux lines are closer to each other at a first length side of the strip light pattern than at a second opposite length side thereof. This first length side is then preferably located at the side where a vehicle approaches.

According to a non-claimed example, the at least one strip light pattern may extend over at least 50% of a width of the traffic surface, said width being measured in the width direction substantially perpendicular to the direction of the traffic surface. In even more non-claimed examples, the at least one strip light pattern may extend over at least 60% of said width, more preferably over at least 70% of said width, e.g. over at least 90% of said width. In this way, the strip light pattern may appear significantly on the traffic surface as a traffic surface marking.

According to a non-claimed example, the at least one sensor may be configured for sensing data related to the presence and/or the movement and/or the speed on the traffic surface or in the vicinity of the traffic surface of any one or more of the following: a vehicle, a pedestrian, an animal, a static object, a moving object. In this way, a wide range of danger situations may be detected. For example, the detection of the presence of a pedestrian or of an animal on the traffic surface or in the vicinity of the traffic surface may indicate a potential collision danger for the traffic surface user. In another example, the speed of a vehicle being above the speed limit of the traffic surface may indicate a danger for the driver of the vehicle. In another example, the presence of a bicycle on a road or on a bicycle lane and of a driver taking a side turn may indicate a danger of collision. In another example, two road users moving in the direction of a traffic intersection may indicate a collision danger.

The traffic surface may comprise at least one lane, wherein a lane of the at least one lane may have a type comprising: a travel direction and/or one or more traffic surface markings (e.g. an arrow traffic surface marking, a bus-only lane, a one-way lane, etc.). In addition, the travel direction associated to one or more lanes of the at least one lane may change depending on certain conditions. For example, the travel direction associated to a lane may be reversed by a traffic surface authority on a schedule (predefined or not) in order to dynamically handle changes in the traffic flow and to maintain a fluid flow of traffic on the traffic surface. Typically, a lane is a lane in which vehicles circulate, but it could also be a lane such as a footpath, a zebra crossing lane or sidewalk in which pedestrians are circulating.

According to a non-claimed example, the at least one sensor may be configured for sensing data related to the presence of a vehicle on one or more lanes of the traffic surface and/or the movement of a vehicle on one or more lanes of the traffic surface and/or the speed of a vehicle on one or more lanes of the traffic surface. The at least one strip light pattern may be formed at least on the one or more lanes where the at least one vehicle has been sensed. If multiple lanes have the same travel direction, it may not only be formed on the lane in which a vehicle was detected but also in an adjacent lane. In this way, the warning may be better directed at the users of the traffic surface that really may encounter a danger, thereby avoiding to unnecessarily warn and hence deconcentrate the users that are not in danger, *e.g.* those that are on lanes not associated with a danger. In an example, the speed of a vehicle in one of the lanes of the traffic surface being above the speed limit of the traffic surface may indicate a danger for the driver of the vehicle in that lane. The strip light pattern may thus be formed on that particular lane, to warn that particular driver of the danger, without unnecessarily warning and hence deconcentrating the users of other lanes. In another example, the detection of the presence of a static object, *e.g.* a boulder, on one lane of the traffic surface may indicate danger for the drivers of the vehicles of that lane. The strip light pattern may thus be formed on that particular lane, to warn that particular driver of the danger, without unnecessarily warning and hence deconcentrating the users of other lanes. In another example, the detection of the direction of the movement of the vehicle may indicate that the driver is leaving the dangerous zone, such that no strip light pattern may be necessary.

According to a non-claimed example, the at least one sensor and/or receiver may comprise an optical sensor such as a photodetector, an image capturing means, such as a visible light camera or a thermal camera, a radar such as a Doppler effect radar, a LIDAR, a sound capturing means, a humidity sensor, an air quality sensor, a temperature sensor, a weather sensor, a visibility sensor, a movement detector, a motion sensor, an alarm device (*e.g.* a push button which a user can push in the event of an alarming situation, *e.g.* a pedestrian willing to cross a road), an RF sensor, a noise sensor, a vibration sensor, a receiving means with an antenna (that may for example be configured to capture a sequence of signals, in particular a sequence of short-range signals, such as Bluetooth signals) or any combination thereof. In this way, a wide range of events, in other words dangerous situations, may be detected. Additionally, environmental data about an event in the vicinity of the traffic surface may be detected, *e.g.* characteristics (presence, absence, state, number, direction, speed, wearing mask or not) of objects like vehicles, street furniture, animals, persons, sub-parts of the traffic surface, infrastructure elements, or properties related to the environment (like weather, *e.g.* rain/fog/sun/wind, pollution, visibility, earth quake) or security related events (explosion, incident, gun shot, user alarm) in the vicinity of the traffic surface. It is noted that the at least one sensor may be one or more of the above-mentioned types of sensors. In the case of multiple sensors being present, the sensors may be of different types and/or located in different locations in the system and/or pointed towards different portions of the traffic surface.

WO2019175435A3 A1 in the name of the applicant, which is included herein by reference, describes a luminaire network, comprising a plurality of luminaires comprising a lighting apparatus, wherein a plurality of the luminaires comprise a communication unit configured to enable communication of data between said plurality of luminaires; a processing unit; a control unit configured to control the lighting apparatus as well as the communication and processing units and at least one first sensor configured to output first sensed data. The processing unit of the luminaire is configured to process the first sensed data to produce first processed data, and the luminaire network is further configured such that the first processed data of at least two luminaires is further processed to produce second processed data. The first and/or second processed data may then be used for controlling the light output of the at least one optical unit.

According to a non-claimed example, the system may comprise at least two sensors, preferably among a camera, a movement detector, a push button. In this way, the event may be detected in at least two different ways and the information from the at least two sensors may be used in conjunction, for improved accuracy or such that even if one sensor fails, the event may still be detected by the at least other sensor. For example, the presence of a pedestrian in the vicinity of the traffic surface, which may indicate a potential collision danger with the pedestrian, may be detected through a camera footage and/or by a movement detector and/or by a push button which the pedestrian may push in case the pedestrian wants to cross the traffic surface. In another example, the speed of a vehicle, which, if it is above the speed limit of the traffic surface may indicate a danger for the driver of the vehicle, may be detected by a camera footage and/or a Doppler motion sensor. Weather sensors may also help warning users of the traffic surface of the presence of ice or mist or any other weather-related danger.

The at least one luminaire may be located near a point of interest and the at least one sensor and/or the receiver may be configured for sensing and/or receiving data related to an event in the vicinity of that point of interest. The light strip pattern may then be formed upstream of the point of interest when looking in the direction of a movement on the traffic surface towards that point of interest, for example when looking in the direction of a movement along a lane of the traffic surface. In other words, a user of the traffic surface (for example the driver of a vehicle) approaching the point of interest would encounter the strip light pattern on its way to the point of interest and before reaching said point of interest. In this way, said user of the traffic surface may be informed of an approaching danger and may react accordingly, for example by decelerating, or paying more attention.

The luminaire may be located near a zebra crossing, a bike lane crossing, a traffic surface crossing, a stop, a school, a blind corner at the end of an aisle, any dangerous location on the traffic surface and/or in the vicinity of the traffic surface. The previous list is not exhaustive, and a skilled person would understand that any dangerous location, *i.e.* a location on the traffic surface and/or in the vicinity of the traffic surface that could lead the traffic surface user to a dangerous situation, would be particularly suited for a lighting system according to preferred embodiments. In this way, the most dangerous locations may be provided with an efficient warning system, reducing the risks associated with these a priori dangerous locations.

According to a non-claimed example, in addition to the strip light pattern, the first light configuration may further comprise forming an additional light pattern on the traffic surface. Said additional light pattern may be distinct at least in shape from the strip light pattern and may preferably also be distinct in color and/or in a flashing pattern. In other words, in addition to illuminating the traffic surface with a strip light pattern to warn the traffic surface users, *e.g.* the drivers of vehicles, approaching the point of interest, the luminaire may also be able to illuminate the traffic surface in a standard manner as defined in the lighting norms of a country. In this way, both types of illumination, for warning and for standard illumination, may be provided by one luminaire. In the example of a zebra crossing, the luminaire may thus be able to illuminate the zebra crossing while also being able to illuminate a strip light pattern to warn the users of the traffic surface (for example the drivers of vehicles) approaching said zebra crossing of a potential danger. In the example of a luminaire upfront a zebra crossing, the luminaire may thus be able to illuminate upfront and/or on the zebra crossing while also being able to illuminate a strip light pattern, preferably upfront the zebra crossing, to warn the users of the traffic surface (for example the drivers of vehicles) approaching said zebra crossing of a potential danger. Additionally, using a different color and/or a flashing pattern for the strip light pattern may help distinguishing the strip light pattern as a warning signal from the standard lighting and thereby may increase the efficiency of the lighting system in terms of safety.

According to a non-claimed example, in addition to the first configuration, the controller of the luminaire may be configured for controlling the light output of the at least one optical unit according to a second configuration. Said second configuration may be different from the first configuration. Preferably, the second configuration may be the default configuration in the absence of occurrence of an event. In this way, the luminaire may illuminate the traffic surface in at least two configurations. These two configurations may correspond to different use situations derived from the information received by the controller from the sensor(s) and/or the receiver. For example, in the example wherein the point of interest is a zebra crossing, it may be desirable, if no pedestrian is detected in the vicinity of the zebra crossing, to solely illuminate the traffic surface according to a configuration in which the purpose of the lighting is only to illuminate the traffic surface and the zebra crossing. On the contrary, if a pedestrian is detected, *e.g.* by the sensor, it may be desirable to illuminate the traffic surface according to a configuration in which the purpose of the lighting is also to warn any incoming vehicle of the potential danger that lies ahead of the vehicle. While very dependent on the point of interest and the type of events detected, in an example, the controller may be configured to control the light output according to the second configuration by default, for example in the absence of any sensor information.

According to a non-claimed example, the second light configuration comprises at least one light pattern and the at least one light pattern of the second light configuration may be different from the additional light pattern and from the strip light pattern of the first configuration. Preferably, the at least one light pattern of the second light configuration may differ from the additional light pattern of the first configuration in at least one of the light intensity, the flashing frequency, the light spectral frequency and the light distribution. In this way, the light output of the luminaire may be better adapted to the situation. Indeed, in the example wherein the point of interest is a zebra crossing and in the event of a pedestrian being detected, *e.g.* by a sensor, in the vicinity of the zebra crossing and/or in the event of a vehicle being detected approaching the zebra crossing, *e.g.* by a sensor, it may be desirable to even further increase the visibility in the region of the zebra crossing. This may be achieved by the controller switching from a second configuration C2, wherein the traffic surface is illuminated according to a light pattern P2, to a first configuration C1 where the traffic surface is illuminated according to an additional light pattern P1, wherein the light intensity of the additional light pattern P1 is higher than light intensity of the light pattern P2. In other situations, it may also be desirable to increase the visibility or the contrast of the warning strip light pattern on the traffic surface. This may be achieved by decreasing the light intensity of the light output, from a light pattern P2 to an additional light pattern P1, of reduced intensity. Likewise, the additional light pattern P1 may differ from the light pattern P2 in their flashing frequency, *i.e.* the light output intensity in P1 may oscillate between $I_{on}$ and $I_{off}$, where $I_{on}$ is larger than $I_{off}$ mode (for example $I_{off}$ may be zero) with a pulsing frequency. Likewise, the difference between the additional light pattern (P1) and the light pattern (P2) may reside in their light spectral frequency, for example the color of the light pattern P2 may be a warm white while the color of the additional light pattern P1 may be a cold white or even contain at least partly UV light. Finally, the additional light pattern P1 may differ from the light pattern P2 in their light distribution, for example the light distribution of the additional light pattern P1 may be such as to illuminate only some selected lanes (for example only in one direction) instead of illuminating the whole traffic surface in a light pattern P2. The differences between the additional light pattern P1 and the light pattern P2 may be any combination of the above-mentioned differences.

According to a non-claimed example, the color of the light of the least one strip light pattern may be red, preferably with a wavelength between 610 and 740 nm, or blue, preferably with a wavelength between 439 and 480 nm, or amber. In this way, the at least one strip light pattern is more visible on the traffic surface. Additionally, the red color is typically associated with danger in most traffic laws and may thus catch the attention of the traffic surface user and increase the awareness of a potential danger. Additionally the color may be changed based on the type of event wherein for example green would be selected for a limited risk, while red would be selected for a high risk of danger.

According to a non-claimed example, the lighting system may further be configured to derive a type of event from the sensed data and/or the received data and the color of the light of the at least one strip light pattern and/or the position of the at least one strip light pattern on the traffic surface and/or a falsing pattern may be based on the type of event. For example, the color may be green when there is no risk, orange when the risk is limited and/or red when the risk is high. Any one or more of the controller, the at least one sensor and/or the receiver may be configured to derive the type of event from the sensed and/or received data. The strip light pattern may be positioned differently based on the event. For example, the strip light pattern may be positioned at a first distance of the point of interest when a vehicle has been detected going towards a zebra crossing below the speed limit but the strip light pattern may be positioned at a second distance larger than the first distance when a vehicle has been detected going towards the zebra crossing above the speed limit. In addition, other warning meachnisms may be controlled by the system. For instance other lights, visual indicators, louspeakers, communication devices (RF) and/or actuators (barriers etc) may be controlled simultaneously to generate an alarm in case of danger, as a complement to the light strip.

According to a non-claimed example, the lighting system may comprise a plurality of luminaires. A person skilled in the art would understand that luminaires in a network may be configured in a mesh network and to communicate using known communication techniques like Bluetooth, Bluetooth Low Energy, ZigBee, Wi-Fi, Wi-Sun among others. Also long-distance communication techniques, such as cellular communication, may be used. The controller of each of said plurality of luminaire may be configured for receiving the information from the at least one sensor and/or the receiver and for controlling the light output of its respective optical unit based on the received information. The controlling may be done in a coordinated manner with the controllers of the other luminaires. In this way, by having several luminaires that operate together, the effectiveness of the system for signaling to the traffic surface user is increased. Indeed, the strip light pattern may be formed several times in several different zones of the traffic surface leading to the point of interest, which may increase the awareness of any user of the traffic surface (for example the driver of a vehicle) heading towards the point of interest. For example, in an example wherein the point of interest is a zebra crossing, the plurality of luminaires of the lighting system may be placed upstream of the zebra crossing when looking in the direction of a movement along the traffic surface towards the zebra crossing. By placing the luminaires at a distance from one another, the user of the traffic surface may encounter several times the strip light pattern on its way to the point of interest and before reaching said point of interest. In this way, said user of the traffic surface may be informed of the potential approaching danger and may react accordingly, for example by decelerating, or paying more attention. The strip light pattern may also be formed sequentially, such that the warning is even clearer to the user of the traffic surface, *i.e.* a first strip light pattern may be formed by a first luminaire, then a second strip light pattern by a second luminaire placed closer to the point of interest, then a third strip light pattern by a third luminaire placed even closer to the point of interest, etc. such as to "follow" the user of the traffic surface in its movement. The luminaires may be coordinated such as to take into account the speed of the user and/or the speed limit of the traffic surface and/or the distance between the luminaires and/or the type of event.

According to a non-claimed example, the controllers of the plurality of luminaires may be configured for controlling the light output of the plurality of luminaires based on the sensed and/or received data and in a coordinated manner per travel direction. In this way, the lighting system may treat users of the traffic surface approaching or leaving the point of interest differently. For example, the plurality of luminaires that are located upstream of a zebra crossing when looking in the direction of a movement along the traffic surface away from the zebra crossing may not need to warn a user of the traffic surface leaving the zebra crossing. Indeed, issuing a warning for such users of the traffic surface that have already left the point of interest may unnecessarily deconcentrate said users.

According to a non-claimed example, the controllers of the plurality of luminaires may be configured for controlling the light output of the plurality of luminaires based on the received information and in a coordinated manner per lane of the traffic surface. In this way, the lighting system may treat users of the traffic surface approaching or leaving the point of interest from different lanes differently. For example, an event such as a detection of a vehicle speeding above the legal speed limit and approaching a school may be detected only on one lane of the traffic surface. The plurality of luminaires may not need to warn the users of the traffic surface in all other lanes. Indeed, issuing a warning for such users of the traffic surface that are respecting the speed limits may unnecessarily deconcentrate said users. According to another example, lanes having different speed limits and sequential strip light patterns for a plurality of luminaires may have different firing sequences. It is noted that the coordination per lane may also comprise adaptive photometry based on movable optics and/or selective driver control.

According to a non-claimed example, upon the determination of the occurrence of an event associated with the traffic surface in a travel direction towards a point of interest, the controllers of at least two luminaires closest to the point of interest, as seen in the travel direction, e.g. at least one upstream and at least one downstream luminaire or at least two upstream luminaires, are configured for controlling their light output according to the first light configuration (C1). In this way, by having at least two luminaires that operate together, the effectiveness of the system for signaling to the traffic surface user is increased. Indeed, the strip light pattern may be formed at least two times in at least two different zones of the traffic surface leading to the point of interest, which may increase the awareness of any user of the traffic surface (for example the driver of a vehicle) heading towards the point of interest. Additionally, since the light may warn the users of the traffic surface in one or more travel directions towards the point of interest, the safety of all users of the traffic surface is increased. In an example wherein the point of interest is a zebra crossing, the at least two luminaires of the lighting system that are placed upstream and downstream of the zebra crossing when looking in the direction of a movement along the traffic surface towards the zebra crossing may thus issue a warning signal such that user of the traffic surface arriving towards the point of interest in both directions of the traffic surface may react accordingly, for example by decelerating, increasing awareness, paying more attention, etc.

According to a non-claimed example, the number of luminaires that are coordinated depends on the distance between the luminaires and/or the speed limit associated with the traffic surface in the vicinity of these luminaires and/or a sensed speed of a vehicle and/or a type of event. In this way, the effectiveness of the warning signal may be increased by taking the braking distance into account. Indeed, the higher the speed of the users of the traffic surface, the smaller the time it takes for the user to reach the point of interest and hence the less time to react. In addition, the speed of a person or animal in the vicinity of the traffic surface may also be taken into account by the system. By having more luminaires coordinated, the strip light pattern may be formed on the traffic surface at larger distances ahead of the point of interest and hence may allow more time for the user to react accordingly, for example by decelerating or paying more attention.

According to a non-claimed example, upon detection of an event associated with one or more lanes of the traffic surface and one or more directions towards a point of interest, the controllers of at least the two closest luminaires to the point of interest in the one or more detected directions are configured for controlling their light output according to the first light configuration on the one or more lanes associated with the detected event. According to an embodiment, the controllers of at least the two closest luminaires to the point of interest in the one or more detected directions are further configured for controlling their light output such that the at least one strip light pattern does not extend on one or more lanes of the traffic surface not associated with the detected event.

As mentioned above, an event requiring that a warning is issued may be detected only on one or more lanes of the traffic surface. The plurality of luminaires may not need to warn the users of the traffic surface in all other lanes. Indeed, issuing a warning for such users of the traffic surface may unnecessarily deconcentrate said users. The plurality of luminaires may hence not need to switch from the second light configuration, which purpose is to solely illuminate the traffic surface.

According to a non-claimed example, the at least one optical unit may comprise at least two optical units. An optical unit may comprise at least an optical element, and an associated light source. In an example, the optical unit may comprise an optical plate comprising a plurality of optical elements, for example a lens plate with a plurality of lens elements, and a support, such as a printed circuit board, comprising a plurality of associated light sources. Alternatively, in an example, the optical unit may comprise a plurality of optical plates, each comprising a plurality of optical elements, for example a plurality of lens plates with each a plurality of lens elements, and a plurality of supports, such as printed circuit boards, each comprising a plurality of associated light sources (for example two PCBs for normal and/or two PCBs for warning lighting). Additionally, the optical unit may comprise at least one driver configured for driving the one or more light sources. The controller may be configured for controlling the at least two optical units. Optionally, the driver and the controller may be integrated in a single unit. Preferably, each respective optical unit is configured for outputting a respective light pattern of one or more light configurations. In this way, the luminaire has more flexibility to achieve the desired light patterns. Alternatively one optical unit can be configured to provide the two types of lighting (normal and warning) in one PCB, while switching from one lighting to another via selective control (drivers). Additionally, this allows to have one dedicated optical unit for forming the strip light pattern used in warning illumination and one optical unit for forming the light pattern used at least in normal illumination (second configuration), but optionally also in warning illumination (first configuration) together with the dedicated optical unit. The at least two optical units may be controlled by either dedicated drivers, for example one driver per PCB on which light sources are arranged, or by a multi-channel driver. Alternatively, an optical unit may combine different optical elements and may be controlled by either dedicated drivers or a multi-channel driver to form at least the strip light pattern used in warning illumination (first configuration) and the light pattern used in normal illumination (second configuration). A skilled person would understand that further combinations of the above options may be envisaged depending on the circumstances. Further optical elements may be moveable to obtain different light distributions within each type of illumination, for instance to move the light strip on the ground or to cover different normal lighting scenarios.

In an example, the lighting system may comprise one or more optical units controlled according to the second light configuration, *i.e.* for normal lighting, and one or more optical units for forming a strip light pattern according to the first light configuration *i.e.* for warning lighting. In such a scenario, a dedicated driver may be associated with each type of optical unit. In an example related to lighting a zebra-crossing, it is preferred to lit at all times the zebra-crossing. For that purpose, the luminaire at the zebra-crossing comprises thus a first optical unit and a driver dedicated to forming a light pattern suitable for lighting the zebra-crossing, *i.e.* the additional light pattern. In the art, such light patterns are typically described in terms of an average horizontal illuminance, a uniformity of horizontal illuminance, an average vertical illuminance on lane and a uniformity of vertical illuminance. In accordance with an embodiment, the light system may further comprise a second optical unit dedicated to forming a strip light pattern. When the occurrence of an event has been determined, for instance when a pedestrian has been identified at the zebra-crossing by, e.g. a PIR sensor, the driver of the second optical unit for forming the strip light pattern may start operating according to the first light configuration such that a light strip is projected next to the zebra-crossing, for instance the light strip may be flashing according to flashing pattern to accentuate the warning effect. When the occurrence of an event has been determined, the driver of the first optical unit may yet keep operating as before, to maintain the lighting of the zebra-crossing. It is noted that the pattern emitted by the first optical unit when operating in the second configuration (normal illumination) may be the same or different compared to the pattern emitted by the first optical unit when operating in the first configuration (warning illumination). The occurrence of the event may further be sent to neighboring luminaires upfront the zebra-crossing, such that these luminaires may adapt the control of their optical units to stop operating according to the second configuration and start operating according to the first configuration. This may comprise either dimming (reducing or increasing ight output) or changing the light color or introducing a flashing pattern into the light pattern of the optical units of these neighboring luminaires which had been operating previously under the second configuration and starting the optical units of these neighboring luminaires for forming the light strip pattern according to the first configuration.

According to a preferred embodiment, the at least one luminaire comprises a first optical unit configured for outputting the strip light pattern of the first light configuration and a second optical unit configured for outputting the additional light pattern of the first light configuration. More preferably, the second optical unit is further configured for outputting the light pattern of the second light configuration. In this way, the warning illumination and the normal illumination may be controlled independently with the two optical units. Additionally, by having the same optical unit outputting both the additional light pattern and the light pattern, the size and cost of the luminaire may be better controlled.

According to a preferred embodiment, each respective optical unit is configured for outputting one or more light configurations on a respective lane of the traffic surface. In this way, the luminaire has more flexibility to achieve the desired light patterns on each of the lanes of the traffic surface.

According to a non-claimed example, the controller is configured to communicate through wired communication and/or wireless communication with controllers of other luminaires and optionally with the at least one sensor and/or the receiver of other luminaires. In this way the controllers of different luminaires may communicate to better coordinate. A person skilled in the art would understand that luminaires in a network may be configured to communicate using known communication techniques like Bluetooth, Bluetooth Low Energy, ZigBee, Wi-Fi, and Wi-Sun among others. Further the network may be a mesh network. The network communication may involve one or more fog devices, a cloud device, a remote server, an external database (traffic,pole, weather database among others) using communication protocols according to the known practice in the art. Optionally the controllers may communicate with the at least one sensor and/or the receiver of other luminaires. In this way, if the at least one sensor and/or the receiver of one luminaire fails, the event may still be detected by the at least one sensor and/or the receiver of another luminaire. Additionally, in this way, a luminaire downstream may receive data from the at least on sensor and/or receiver of other luminaires upstream before such data could be sensed by the at least one sensor and/or receiver of the downstream luminaire and *vice versa.*

According to a non-claimed example, the at least one sensor and/or the receiver is physically located in or on the at least one luminaire. In this way, the at least one optical unit, the controller and the at least one sensor and/or the receiver may be installed at the same location, thereby reducing the amount of cabling needed to connect them.

According to a non-claimed example, the sensor and/or receiver is located at a distance from the luminaire for detecting an event upstream or downstream of the point of interest in the direction of a movement along the traffic surface towards that point of interest. The at least one sensor and/or receiver may be configured to communicate with the controller through wired and/or wireless communication. In this way, the sensor may be positioned further upstream or downstream of the point of interest than the luminaire. This may allow the detection of events even in cases where the view from the luminaire is obstructed, for example by a house or by a sharp turn, such that the luminaire may still output a warning signal in time. This also may allow the at least one sensor and/or receiver to be placed in an area where network cover is better than at the location of the luminaire.

According to a non-claimed example, the optical elements are lens elements. In the context of the invention, a lens may include any transmissive optical element that focuses or disperses light by means of refraction. It may also include any one of the following: a reflective portion, a backlight portion, a prismatic portion, a collimator portion, a diffusor portion. For example, a lens may have a lens portion with a concave or convex surface facing a light source, or more generally a lens portion with a flat or curved surface facing the light source, and optionally a collimator portion integrally formed with said lens portion, said collimator portion being configured for collimating light transmitted through said lens portion. Also, a lens may be provided with a reflective portion or surface, referred to as a backlight element in the context of the invention, or with a diffusive portion.

A lens of the plurality of lenses may comprise a lens portion having an outer surface and an inner surface facing the associated light source. The outer surface may be a convex or planar surface and the inner surface may be a concave or planar surface. Also, a lens may comprise multiple lens portions adjoined in a discontinuous manner, wherein each lens portion may have a convex or planar outer surface and a concave or planar inner surface, or a deformable surface. Exemplary lenses are disclosed in PCT application WO 2019/061879A1 and WO2020/025427 in the name of the applicant, which are included herein by reference.

According to a further non-claimed example, there is provided a method for controlling a lighting system for lighting a traffic surface, said system comprising at least one luminaire, each luminaire comprising at least one optical unit configured for outputting light, a controller configured for controlling the at least one optical unit of that luminaire; said system further comprising at least one sensor configured for sensing data related to an event in the vicinity of the traffic surface and/or a receiver for receiving data related to an event in the vicinity of the traffic surface. The method comprises:

- determining the occurrence of an event in the vicinity of and/or on the traffic surface based on the sensed data and/or the received data; and
- when the occurrence of an event has been determined, controlling the light output of the at least one optical unit (110) of the at least one luminaire (100A, 100A',100B, 100B') according to a first light configuration (C1) to form at least one strip light pattern (S1) on the traffic surface extending in a direction substantially perpendicular to a predetermined direction of the traffic surface.

Examples of the method may be used with all examples of the lighting system described above.

In further embodiments, the orientation of an optical unit may be adapted using an optical element or optical plate that may be movable and/or the control of the light sources may be selective. Examples of movable optics are disclosed in patent applications WO2019134875A1, WO2020136202A1, WO2020136200A1, WO2020136205A1, WO2020136203A1, WO2020136204A1, WO2020136197A1, and WO2020136196A1 in the name of the applicant, which are included herein by reference. Examples of selective control of light elements are disclosed in patent applications WO2019020366A1, WO2020165284A1, WO2020173836A1, and WO2021130275A1 in the name of the applicant, which are included herein by reference. Further apparatus with controllable light distributions, as a way to modify the orientation, are disclosed in PCT application WO 19/020366 A1 in the name of the applicant, which is included herein by reference.

In a particular embodiment, one or more further optical elements may be further provided such as one or more light shielding structures complying with different glare classifications, e.g. the G classification defined according to the CIE115:2010 standard and the G* classification defined according to the EN13201-2 standard. The light shielding structures may be configured for reducing a solid angle of light beams of the light emitting elements by cutting off or reflecting light rays having a large incident angle, thereby reducing the light intensities at large angles and improving the G/G* classification of the luminaire system. The one or more light shielding structures may be mounted on any one of one or more optical elements, the optical unit or the support on which the light sources are arranged by screwing, locking, clamping, clipping, gluing, welding or a combination thereof. Alternatively, the one or more light shielding structures may be integrally formed with any one of one or more optical elements, or the optical unit, for example by 3D printing or molding.

According to an embodiment, the light shielding structures may comprise one or more closed reflective barrier walls, each having an interior bottom edge disposed on a flat portion of tthe optical unit, an interior top edge at a height above said flat portion, and a reflective surface connecting the interior bottom edge and the interior top edge and surrounding one or more associated optical elements of the optical unit. According to another embodiment, the light shielding structures may comprise a plurality of reflective barriers, each comprising a base surface disposed on a flat portion of an optical unit, a top edge at a height above said base surface, and a first reflective sloping surface connecting the base surface and the top edge and facing one or more associated optical elements of an optical unit. Exemplary embodiments of shielding structures are disclosed in patent application WO 2020/249684 A1 in the name of the applicant which is included herein by reference. Other exemplary embodiments of shielding structures are disclosed in patent application WO 2020/058282 A1 in the name of the applicant, which is included herein by reference. Further examples of louver elements are disclosed in PCT patent application WO 2021/186058 A1 in the name of the applicant, which is included herein by reference. Further, a spacer layer may be disposed between the substrate and the one or more optical elements. The spacer layer is provided with one or more holes through which one or more light emitting elements of a light source extend. Examples of spacer layers are disclosed in Dutch patent application N2025166 in the name of the applicant, which is included herein by reference. Furthermore, an optical element or optical unit may be movable and/or the control of the light elements may be selective. Examples of movable optics are disclosed in patent applications WO2019134875A1, WO2020136202A1, WO2020136200A1, WO2020136205A1, WO2020136203A1, WO2020136204A1, WO2020136197A1, and WO2020136196A1 in the name of the applicant, which are included herein by reference. Examples of selective control of light elements are disclosed in patent applications WO2019020366A1, WO2020165284A1, WO2020173836A1, and WO2021130275A1 in the name of the applicant, which are included herein by reference.

The optical unit may be integrally molded but may also be assembled by fixing optical matrices or optical elements in a frame or by fixing optical elements and/or optical matrices to each other, e.g. using a dovetail mechanism. The fixing in a frame may be done e.g. by any one or more of the following methods: welding, a heat and/or pressure treatment, a snap-fit mechanism, etc. Suitable assembly methods are disclosed in PCT application WO 2022/023441 A1 and WO 2020/136197 A1 in the name of the applicant, which are included herein by reference.

## BRIEF DESCRIPTION OF THE FIGURES

The accompanying drawings are used to illustrate presently preferred non-limiting exemplary embodiments of optical units and luminaire heads of the present invention. The above and other advantages of the features and objects of the invention will become more apparent, and the invention will be better understood from the following detailed description when read in conjunction with the accompanying drawings, in which:

Fig. 1 illustrates an non-claimed example of a lighting system on the side of a two-lanes traffic surface and in the vicinity of a zebra crossing.

Figs. 2 and 3 illustrate non-claimed examples of a lighting system on the side of a two-lanes traffic surface and in the vicinity of a zebra crossing which issues a warning sign based on sensor information.

Fig. 4 illustrates and non-claimed example of a lighting system on the side of a four-lanes, two-way traffic surface and in the vicinity of a zebra crossing which issues a warning sign based on sensor information.

Figs. 5a and 5b and Figs. 6a, 6b and 6c illustrate non-claimed examples of a lighting system wherein the controllers of the luminaires are coordinated in such a way to form the strip light pattern in a simultaneous manner, or in a sequence, respectively.

Figs. 7a and 7b illustrate exemplary embodiments of luminaire heads of the lighting system.

Figs. 8 and 9 illustrate non-claimed examples of a lighting system on the side of a two-lanes traffic surface and in the vicinity of a dangerous turn and a bike lane crossing the traffic surface, respectively, which issues a warning sign based on sensor information.

Figs. 10a, 10b, 10c, 10d, 10e and 10f illustrate an exemplary embodiment of a lens element of an optical unit.

Figs. 11a and 11b illustrate Isolux diagrams of the light emitted by a luminaire head of the light system equipped with exemplary embodiments of an optical unit.

Fig. 12 is a perspective view of an exemplary embodiment of a lens plate comprising an array of lens elements similar to the lens element of Figs. 10a-f.

Fig. 13a is a polar diagram for different C planes of the light distribution of the lens plate of Fig. 12.

Fig. 13b is an isolux diagram of the light distribution of the lens plate of Fig. 12.

## DETAILED DESCRIPTION OF EMBODIMENTS

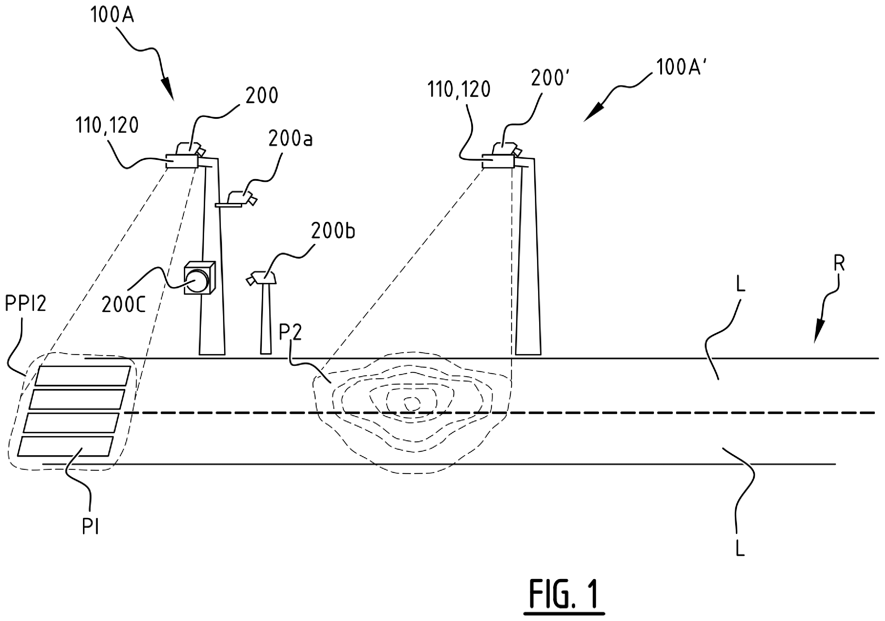

Fig. 1 illustrates an non-claimed example of a lighting system on the side of a two-lanes traffic surface and in the vicinity of a zebra crossing.

The example of the lighting system of Fig. 1 comprises two luminaires 100A and 100A' that are located on one side of the traffic surface R with two lanes L. The two luminaires may be located near a point of interest PI, for instance a zebra crossing. The luminaire 100A comprises at least one sensor 200. The luminaire 100A' may also comprise at least one sensor 200'. The at least one sensor 200 is configured for detecting an event in the vicinity of the traffic surface R. Each luminaire 100a and 100A' further comprises a controller 120 configured for controlling at least one optical unit 110 of that luminaire. The sensor 200, respectively 200'may be located on the luminaire 100A, e.g. on a top portion thereof. As illustrated, alternatively or in addition, a sensor 200a may be fixed to the pole of the luminaire 100A and/or integrated in the luminaire pole 100A, and/or a sensor 200c may be located at a distance of the luminaire 100A. A sensor such as a push button 200d may also be fixed to the luminaire 100A closest to the zebra crossing. The luminaire 100A' may similarly be provided with one or more additional sensors (not represented).

The controller 120 of the luminaire 100A is further configured for receiving sensor information from the at least one sensor 200 and controlling the light output of the optical units 110 of the luminaires 100A and 100A' according to a light configurations C2 based on the received sensor information. Controlling according to the light configuration C2 may comprise forming two light patterns PPI2 and P2 on the traffic surface. By light pattern on the traffic surface is meant a light distribution on the traffic surface.

The light configuration C2 may be associated with the non-detection of an event based on the received sensor information. This configuration C2 may be the default situation where there are no pedestrians near the zebra crossing and/or no vehicle on the traffic surface R, and the luminaires illuminate then the traffic surface with normal light patterns. The light pattern PPI2 may be associated with the luminaire 100A, at the zebra crossing, as illustrated in Fig. 1, while the light pattern P2 may be associated with the luminaire 100A' further ahead of the zebra crossing. The light patterns PPI2 and P2 may be different. Alternatively the light patterns of the luminaires of the lighting system in the second configuration may be identical, for instance when the point of interest is a zone where works are in progress. At the zebra crossing, the pattern PPI2 may be focused to illuminate the zebra crossing, for instance using a light beam having an angle from the luminaire 100A. The light pattern P2 further ahead of the zebra crossing may be a standard illumination light pattern illuminating the traffic surface substantially under the luminaire 100A'.

In the next figures, for the sake of conciseness, only sensors located at a distance from the luminaire will be illustrated. It should however be noted that the inventive concept behind the invention may be applied to the lighting systems comprising other types of sensors, for instance sensors mounted on the luminaire.

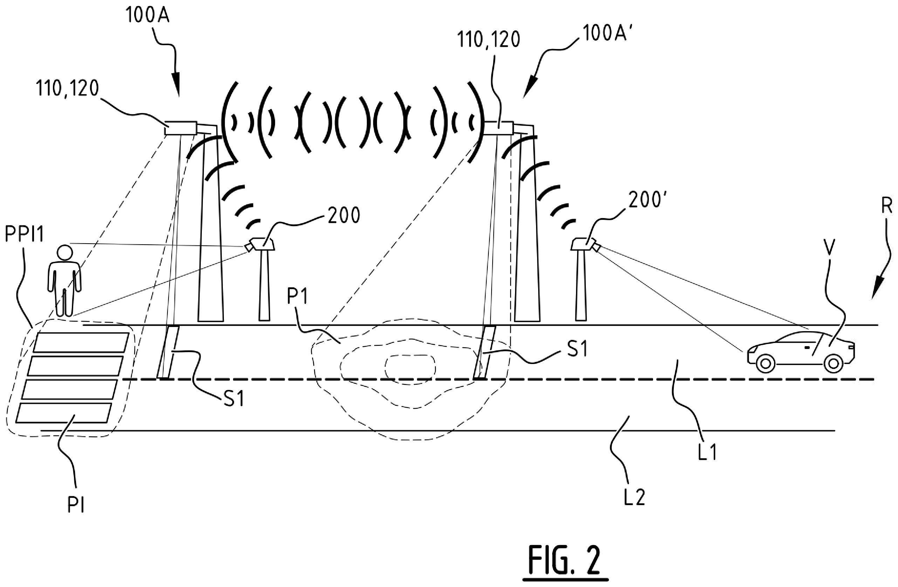

Fig. 2 illustrates an non-claimed example of a lighting system on the side of a two-lanes traffic surface and in the vicinity of a zebra crossing which forms a strip light pattern based on sensor information. Fig. 2 is similar to Fig. 1 but differs from it at least in that a pedestrian is detected near the zebra crossing and a vehicle V is detected approaching the zebra crossing. Following the detection of these events, the sensor information is communicated to the luminaires 100, for example by wired or wireless communication means. The controllers 120 of the luminaires 100A and 100A' then control the light output of the luminaires 100A and 100A' according to the first configuration C1. In the configuration C1, the controller 120 of the luminaires 100A and 100A' control the light output of their optical units 110 according to the first configuration based on the received sensor information. In particular controlling the light output of the optical units 110 according to the first light configuration C1 comprises forming at least one strip light pattern S1. This strip light pattern S1 has the purpose of warning any user of the traffic surface R, such as, for example the driver of the vehicle V, that a danger may lie ahead. The luminaires 100A and 100A' may also illuminate the traffic surface R with additional patterns, respectively PPI1 and P1. The additional pattern PPI1 may be focused on the zebra crossing PPI1. The pattern PPI1 may be emitted from the luminaire 100A closest to the zebra crossing. The additional patter P1n may be a standard illumination light pattern illuminating the traffic surface R under the luminaire 100A'. The light pattern P1 may be emitted from the luminaire 100A' further ahead of the zebra crossing.

It is noted that the light patterns PPI1 and P1 of Figure 2 may be the same as or different from the patterns PPI2 and P2 of Figure 1, respectively. Indeed, they may differ in their light intensity, their flashing frequency, their light spectral frequency, *i.e.* their color, and/or their light distribution. In the example illustrated in Fig. 2, the light intensity of PPI1 is higher than the one of PPI2, such as to increase the visibility around the zebra crossing PI and thereby increase the safety of the pedestrian crossing the traffic surface R. The light intensity of the additional light pattern P1 may also be lower than the intensity of the additional light pattern P2. This lower intensity may be desired such that there is a better contrast between the strip light pattern S1 and the traffic surface R illuminated by the additional pattern P1. The strip light pattern S1 may also have a more distinct color, such as red, to better correspond to the idea of danger.

It should be noted that while here, both the presence of a pedestrian and of a vehicle is illustrated, the configuration C1 may be associated with the detection of an event derived from the information from a single sensor. For example, the configuration C1 may correspond to the detection of the presence of only the pedestrian by a motion sensor 200b (as in Figure 1) or a push button 200c (as in Figure 1). In this case, the strip light pattern S1 is formed even if no vehicle V has been detected. Alternatively, the configuration C1 may correspond to the detection of only the vehicle V by a camera 200 or a camera 200'. This situation may be selected because the pedestrian sensing sensor has been identified as malfunctioning or because the point of interest is different from a zebra crossing, for example a dangerous turn, the entrance to a city, an area with limited speed, etc. The configuration C1 may also correspond to the detection of the presence of both the pedestrian and the vehicle V. The advantage of such an example may then be to reduce the energy consumption by not switching between configurations. As already mentioned above, the configuration C1 may also correspond to the detected speed of the vehicle being larger than the speed limit of the traffic surface R.

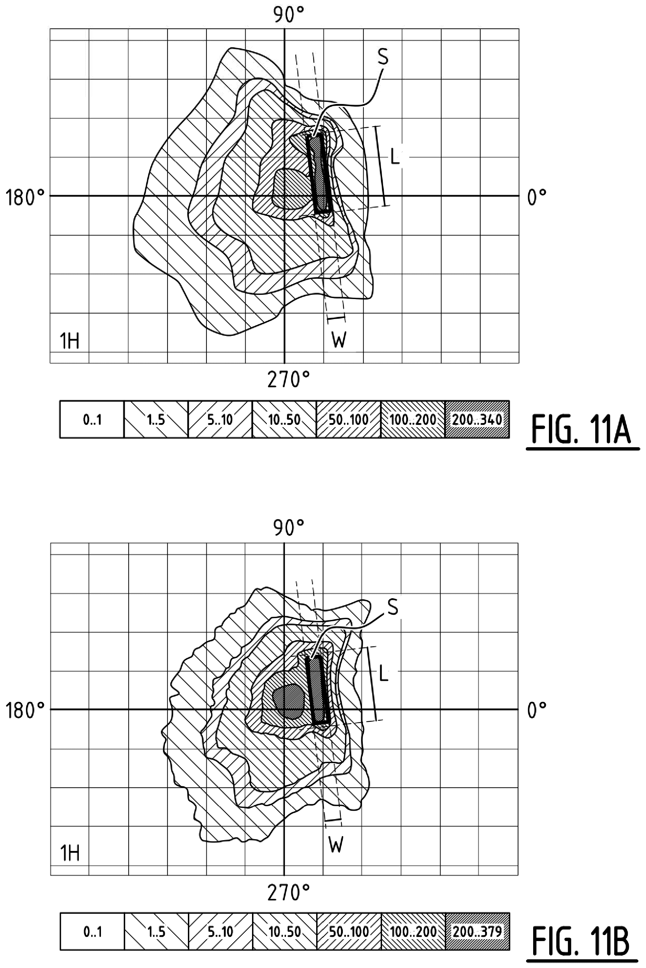

Concerning the strip light pattern S1, preferably a 200 Isolux line of the light beam emitted to form the at least one strip light pattern (S1) is contained within a minimum area enclosing rectangle extending in a direction substantially perpendicular to a direction of the lane (L) and having a length at least 2.5 times as long as a width thereof. This will be discussed in more detail below, with reference to Fig. 11.

It should be noted that above, the Isolux lines referred to are the locus of points that have the same illuminance values on Isolux diagrams. Isolux diagrams corresponding to a particular luminaire are calculated for an hypothetical total luminous flux of 1000 lumens and at a distance of 1 meter of said luminaire. These diagrams are hence a standardized way to represent the shape of the light emitted from said luminaire. In order to find the actual illuminance value $E_{real}$ (in lux) of a particular point on the ground, a conversion factor has to be applied to the value $\hat{E}_{isolux}$ (without units) read off the Isolux diagram. This conversion factor depends on the actual flux of the lamp $\Phi$ in klm (kilolumens) and the mounting height of the luminaire $H$ (meters) in the following manner:

$$E_{real} = \hat{E}_{isolux}\frac{\Phi}{H^2}$$

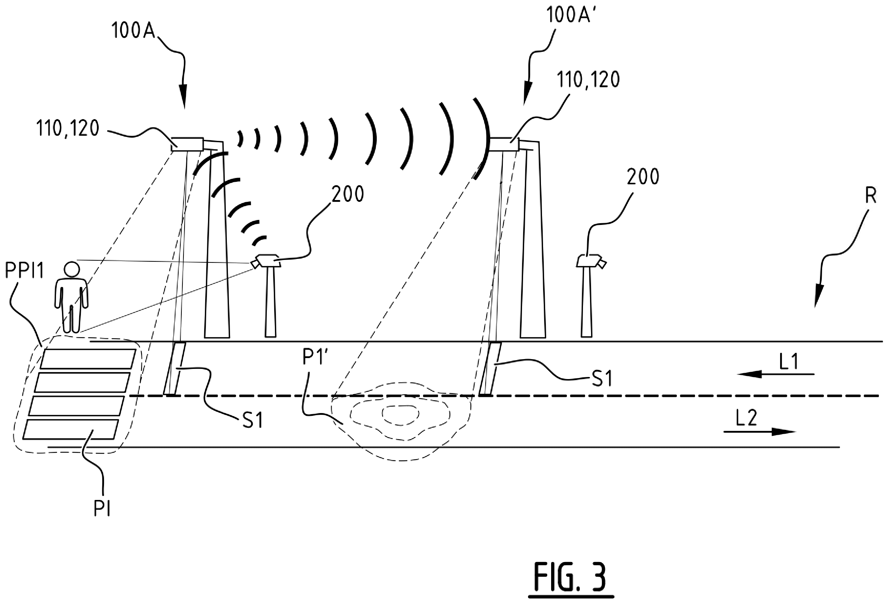

Figure 3 illustrates another non-claimed example of a lighting system on the side of a two-lanes traffic surface and in the vicinity of a zebra crossing which issues a warning sign based on sensor information.

In this example, the traffic surface R is a two-way traffic surface, the Lane L1 is the lane towards the point of interest PI while the lane L2 is the lane away from the PI. The strip light pattern S1 may be formed on the lane L1 under both luminaires 100A and 100A'. The distribution of the additional light pattern P1' of the luminaire 100A' may differ from the example of Figure 2 in that the additional light pattern P1' may be formed to illuminate the lane L2 and not the lane L1. In this way, the warning may be better directed at the users of the traffic surface that really may encounter a danger. This is illustrated on Fig. 3, where P1' only illuminates one lane L2 and not L1. A warning strip on the lane L2 may indeed distract the users that are not facing the potential danger, since they are leaving the point of interest PI. Similarly, such a configuration may be used when a vehicle V in one lane has been detected, e.g. when in a given lane, the speed of a vehicle is above the traffic surface speed limit, it may be desirable to not modify the illumination of the other lanes.

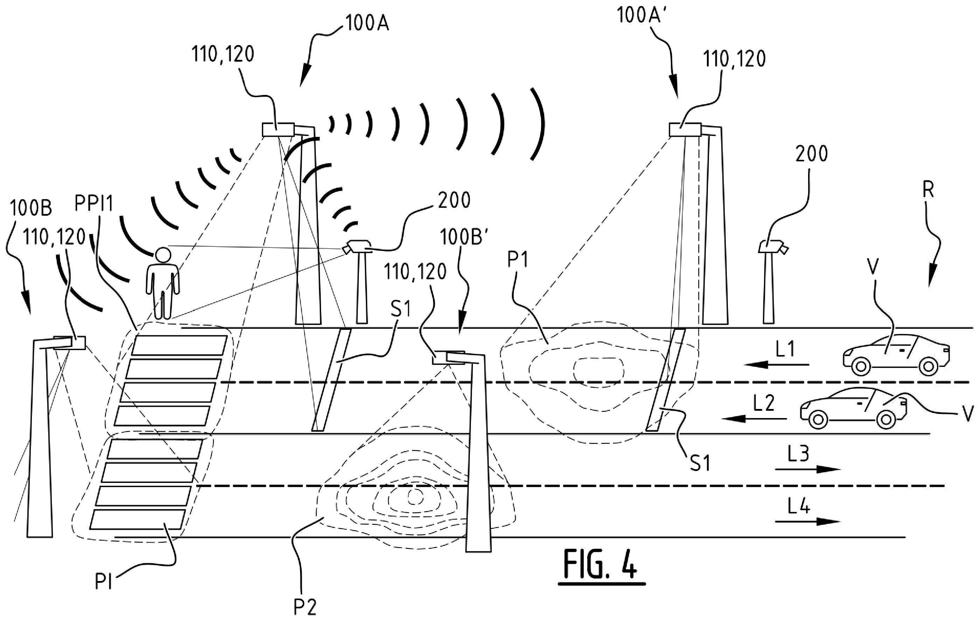

Fig. 4 is similar to Fig. 2 but differs at least in that the traffic surface is a four-lane two-way traffic surface. In such a situation, luminaires 100A, 100A' may be situated on one side of the traffic surface while luminaires 100B, 100B' may be located on the other side of the traffic surface. Luminaires 100A, 100A', 100B, 100B' and their controllers 120 may be coordinated per travel direction, i.e. luminaires 100A, 100A' are coordinated between themselves and 100B, 100B' are coordinated between themselves, but may also be coordinated per lane. The luminaires 100A and 100B closest to the zebra crossing may also be coordinated. The number of luminaires that are coordinated may depend on the distance between the luminaires and/or the speed limit associated with the traffic surface in the vicinity of these luminaires and/or a sensed speed of a vehicle. For example, upon detection of an event associated with one or more lanes of the traffic surface and one or more directions towards a point of interest, the controllers of the two closest luminaires to the point of interest may be coordinated on a traffic surface with a speed limit SL1 while for a traffic surface with a speed limit SL2, larger than SL1, the controllers of the three closest luminaires to the point of interest may be coordinated. Similarly, on a traffic surface where luminaires are closer, the number of coordinated luminaires may be increased and inversely, may be decreased on a traffic surface with luminaires farther apart. The coordination between the controllers of the luminaires may be achieved through wired or wireless communication between the luminaires and/or between the sensors.

In the example illustrated here, luminaires on one side of the traffic surface 100A, 100A' may illuminate only the lanes L1, L2 leading to the PI, while the luminaires on the other side 100B, 100B' may illuminate only the lanes L3, L4 leading away from the PI. Accordingly, only the luminaires 100A, 100A' on one side of the traffic surface may control the light output according to the configuration C1 when detecting an event derived from the sensor information, e.g. the presence of a pedestrian and/or the presence of a vehicle V. In this way, a strip light pattern S1 is only formed on the lanes L1, L2 for which there may be a danger. As illustrated, the strip light pattern S1 may be formed on all lanes of a travel direction, but alternatively the strip light pattern S1 may be formed only on part of the lanes of a travel direction. As illustrated, the luminaire 100B' on the other side of the traffic surface R and corresponding to lanes L3, L4 leading away from the zebra crossing PI may stay in a configuration C2, i.e. not forming a light strip S1 and forming only the additional light pattern P2. The luminaire 100B on the other side of the traffic surface R and corresponding to lanes L3, L4 but situated ahead of the zebra crossing PI may be in a configuration C1, either because an event has been detected, or because the luminaires 100A and 100B located the closest to the zebra crossing are coordinated.

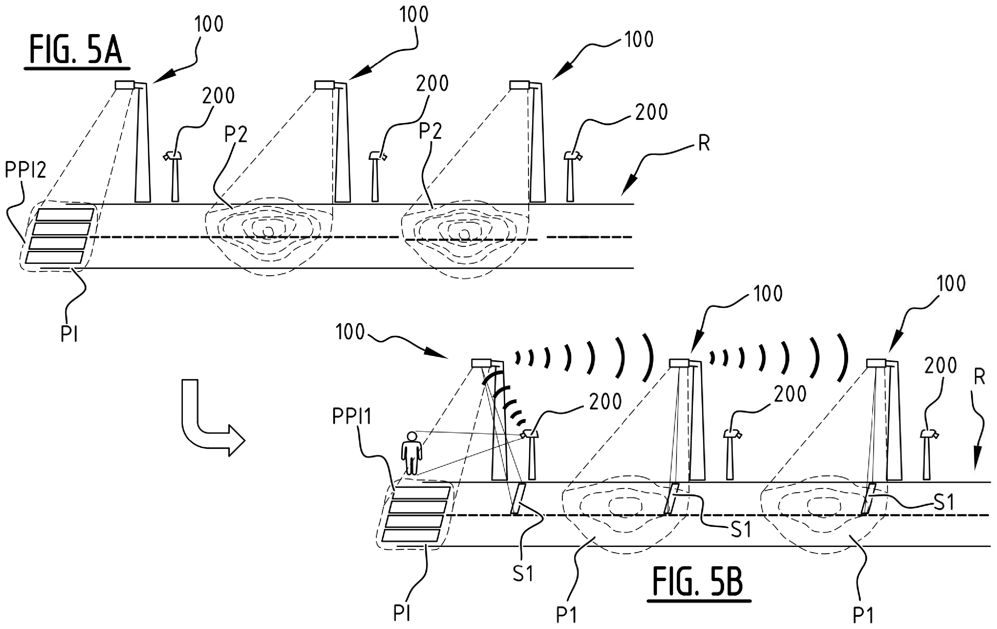

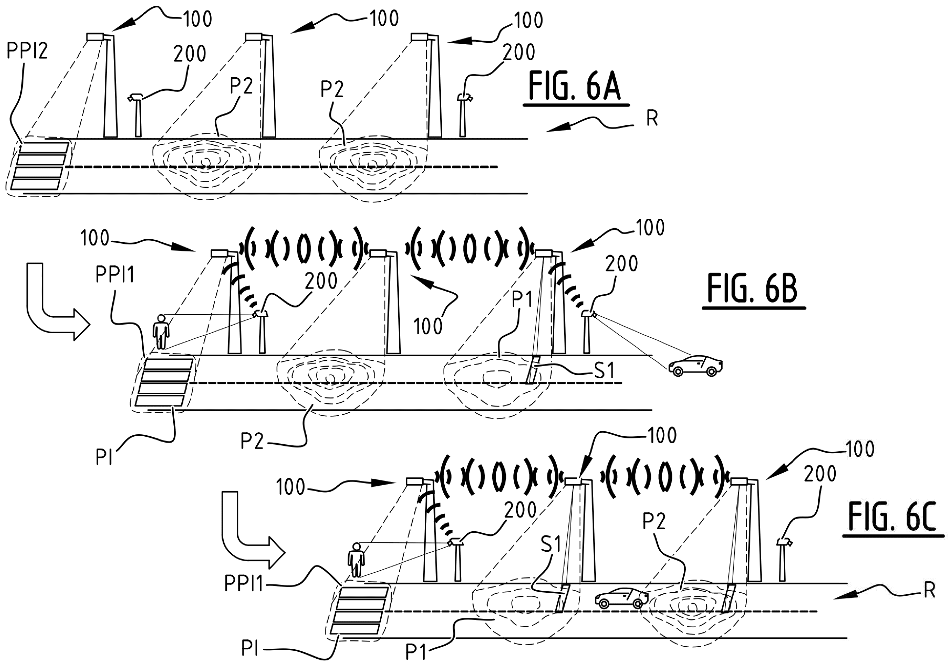

The controllers of the luminaires may be coordinated in such a way to illuminate the surface of the traffic surface according to configuration C1 and hence to all form the strip light pattern S1 in a simultaneous manner, such as illustrated on Fig. 5a and 5b, or in a sequence, such as illustrated on Figs. 6a, 6b and 6c.

In the former case, in the absence of any sensor information, the luminaires may illuminate the traffic surface according to the second configuration C2, by forming a light pattern PPI2 at the zebra crossing and P2 elsewhere, as visible on Fig. 5a. Following the detection of an event such as a pedestrian approaching the zebra crossing or pushing the push button, the sensor information is communicated to the luminaires 100, for example by wired or wireless communication means, as illustrated on Fig. 5b. The controllers of all luminaires 100 may then all switch their configuration simultaneously to C1 and control the light output of the luminaires 100 according to the first configuration C1. As previously described, in C1, the luminaires illuminate the traffic surface R with a strip light pattern S1 which has the purpose of warning any user of the traffic surface R that a danger may lie ahead. The luminaires may also illuminate the traffic surface R with an additional pattern, PPI1 for the luminaire at to the zebra crossing, and P1 elsewhere. It is noted that the strip light patterns S1 may be preferably projected on a part of the traffic surface where the additional patterns PPI1 and P1 do not contribute substantially to the lighting in order to improve the contrast between the strip light and the immediate surrounding traffic surface. For instance, the light strip pattern from the luminaire located next to the point of interest may be emitted with an angle compared to the additional light pattern emitted towards the point of interest.

In the latter case, the situation is similar in the absence of any sensor information, see Fig. 6a. However, as a pedestrian is detected approaching the zebra crossing PI or pushing the push button and a car is detected approaching the zebra crossing PI, and after the sensor information is communicated to the luminaires 100, only the controller of luminaire which is the furthest away from the point of interest, may switch its configuration to C1 see Fig. 6b to form a strip light pattern S1, and optionally an additional light pattern P1. Other luminaires may remain in the C2 configuration until the car approaches. When the car has passed the furthest luminaire, the furthest luminaire may switch back to configuration C2, and the next luminaire in the travel direction may switch to configuration C1, see Fig. 6c to form a strip light pattern S1, and optionally an additional light pattern P1. In this sequential manner, the luminaires 100 switch configuration one after the other, which causes the strip light pattern S1 of each respective luminaire to appear one after the other and may better warn the user of the traffic surface of the potential danger that lies ahead. It should be noted that in order to increase the safety of the pedestrian, the luminaire 100 closest to the zebra crossing PI may remain in a configuration C1 during the whole sequence and illuminate the zebra crossing PI brightly to increase the safety of the pedestrian.

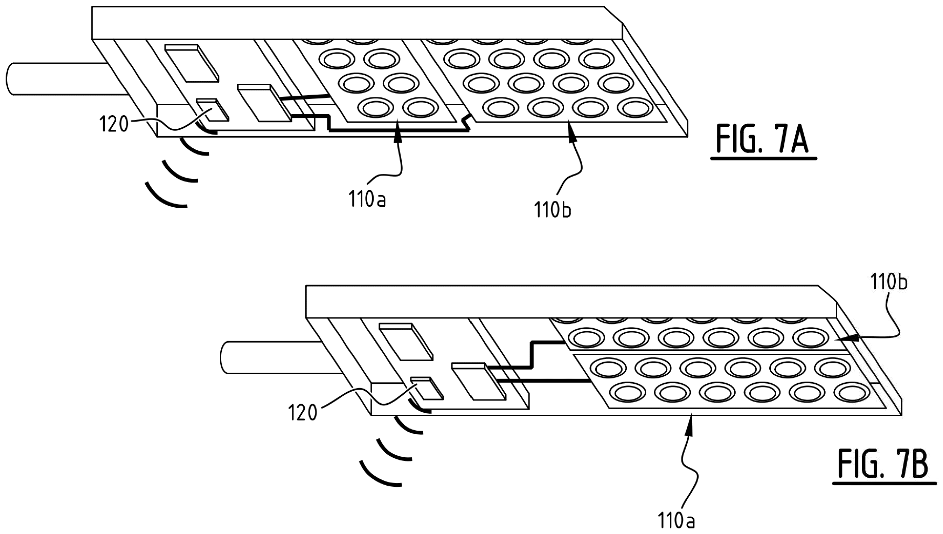

Figs. 7a and 7b illustrate exemplary embodiments of luminaire heads of the lighting system. The luminaire head may contain at least two optical units 110a and 110b. These optical units may be located side by side like in Fig. 7b or one after the other like in Fig. 7a and are controlled by a common controller 120 or alternatively a dedicated controller for each optical unit (not represented). Each of the respective optical units 110a, 110b may be configured for outputting a respective light pattern of one or more light configurations. For example, the first optical unit 110a may be configured for outputting the strip light pattern S1 of the first light configuration C1 and the second optical unit 110b may be configured for outputting the additional light pattern P1 of the first light configuration C1. Additionally, the second optical unit 110b may be further configured for outputting the light pattern P2 of the second light configuration C2. Each respective optical unit 110a, 110b may be configured for outputting one or more light configurations on a respective lane of the traffic surface. The controller 120 may be configured to communicate through wired communication and/or wireless communication with the at least one sensor and/or with controllers 120 of other luminaires 100 through a cable and/or through a wireless communication module. The optical units 110a, 110b may comprise a board comprising the lights sources as well as a lens plate comprising lenses, a lens being arranged above each light source.

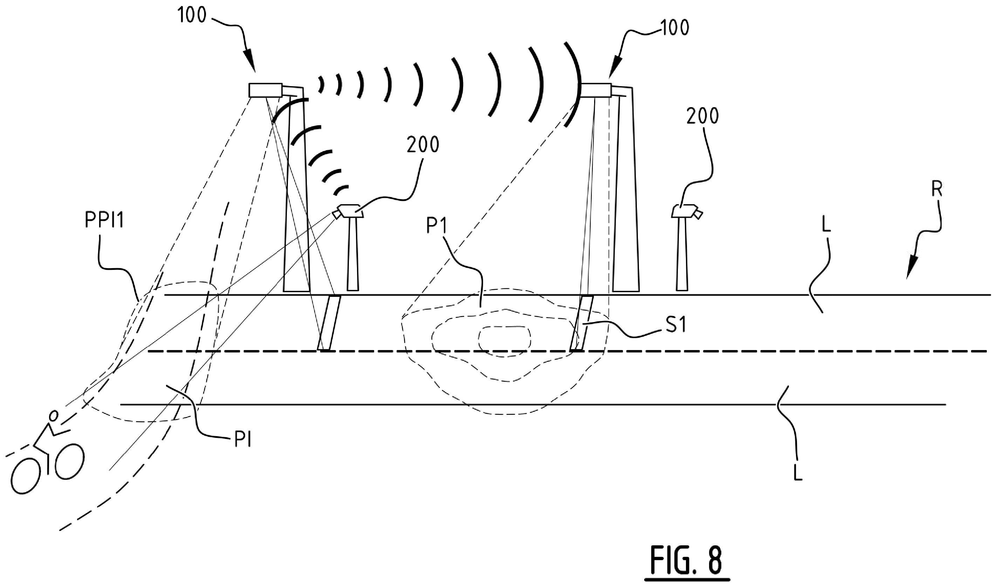

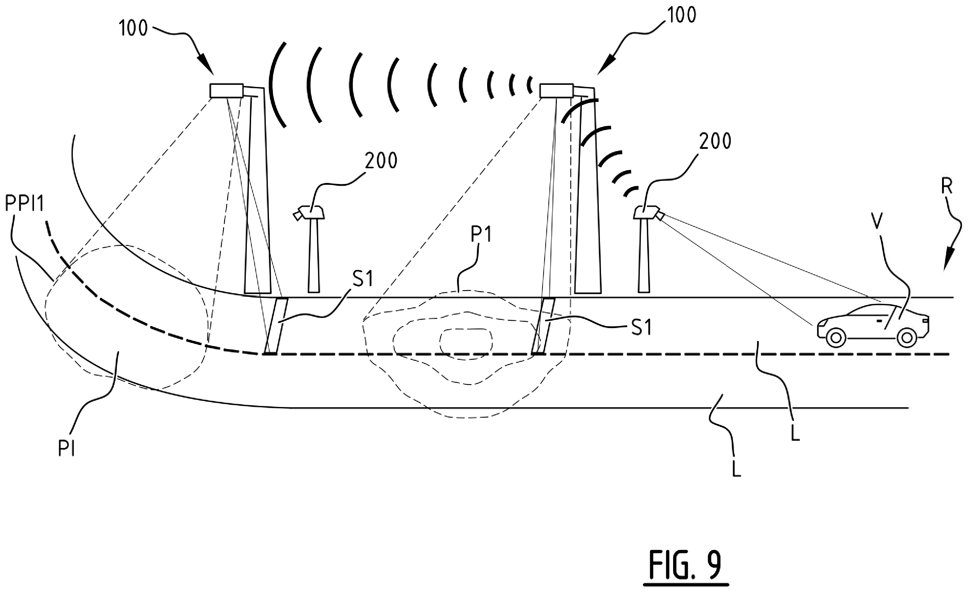

Figures 8 and 9 illustrate non-claimed examples of a lighting system on the side of a two-lanes traffic surface and in the vicinity of a bike lane crossing the traffic surface and in the vicinity of a dangerous turn, respectively, which issues a warning sign based on sensor information. Although the use case situations illustrated in previous Figs. 1-6 all relate to a zebra crossing, other situations involving other points of interest are also possible, *e.g.* a bike lane crossing, as illustrated in Fig. 8 and/or other situations, for which the danger may be different than a collision danger, *e.g.* a dangerous turn, as illustrated in Fig. 9.

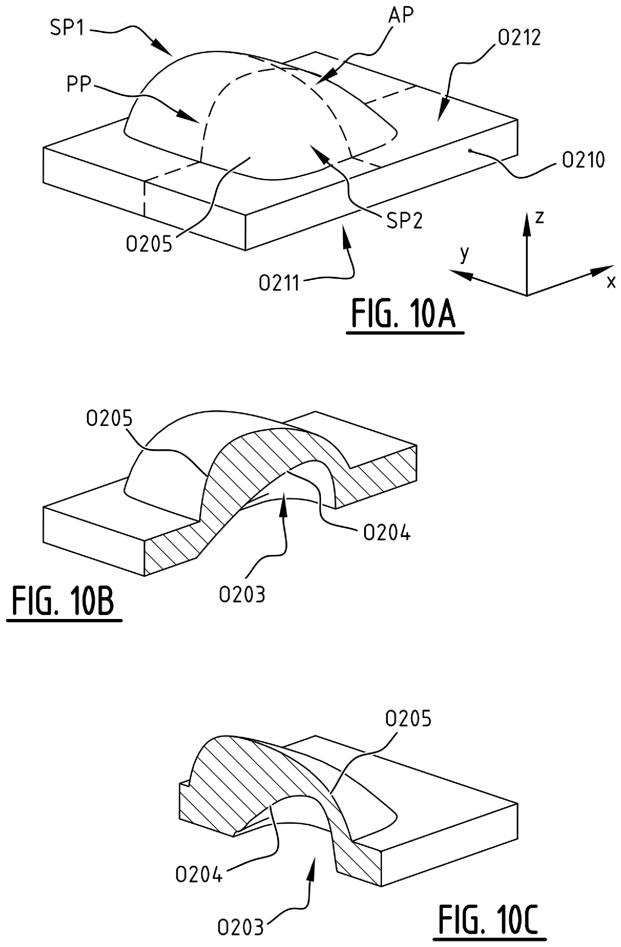

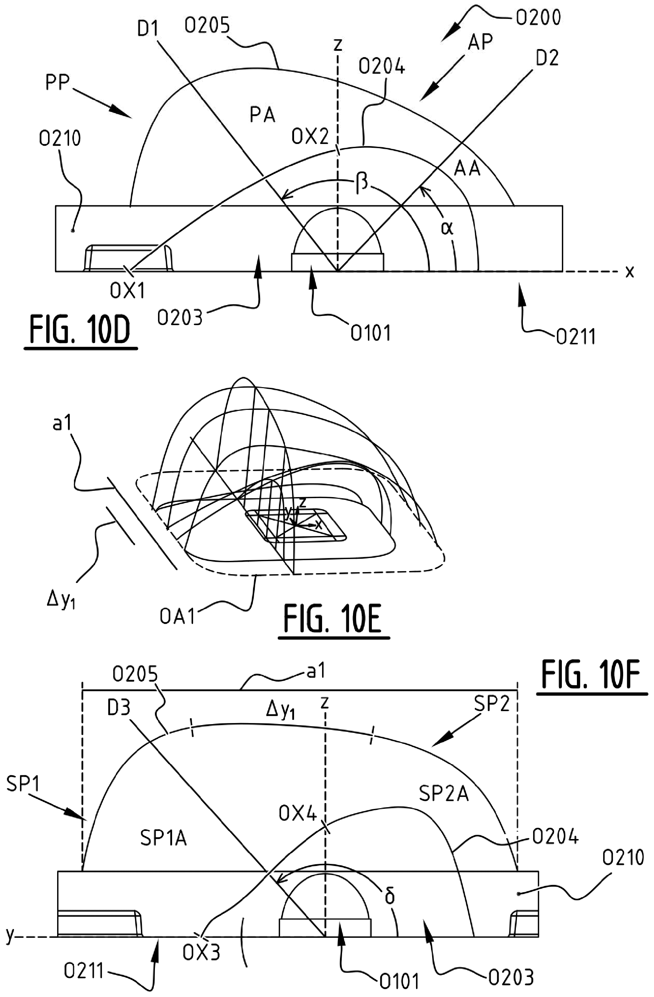

Figs. 10a, 10b, 10c, 10d and 10e illustrate an exemplary embodiment of a lens element of an optical unit. Fig. 10a illustrates a perspective view of a portion of an optical unit comprising a lens element. Fig. 10b illustrates a cut-view of said portion in an xz sagittal plane. Fig. 10c illustrates a cut-view of said portion in an yz coronal plane. The light-shaping module may comprise an optical plate O200 comprising an optical base 0210. The optical base 0210 may be essentially flat and may comprise an upper surface O212 in an xy plane and a lower surface O211 parallel to the upper surface. The at least one lens element is provided with an inner surface O204 and an outer surface O205 located on opposite sides thereof. The inner surface O204 is an at least partially convex surface delimiting a cavity O203 configured to accommodate a lighting element O101 (not shown in Fig. 10a-c but shown in Figs. 10d and 10f).

Fig. 10d illustrates a cut-view in a sagittal plane (in the xz plane, see also Fig. 10b) of a portion of the optical unit. The optical unit may comprise an optical plate O200 comprising an optical base 0210. The optical base 0210 may be essentially flat and may comprise an upper surface 0212 facing a first direction parallel to the z axis and a lower surface O211 opposite the upper surface and facing a direction substantially opposite the direction of the z axis. The at least one lens element is provided with an inner surface O204 and an outer surface O205 located on opposite sides thereof. The inner surface O204 is an at least partially convex surface delimiting a cavity O203 configured to accommodate a lighting element O101.

The inner surface O204 has an anterior portion AP and a posterior portion PP seen in a first direction x of the lens element and the outer surface O205 has an anterior portion and a posterior portion seen in the first direction x of the lens element. The inner surface O204 comprises in the posterior portion thereof a substantially flat surface area OX1-OX2 (not that only a line is visible in Fig. 10d but a similar section will be obtained for a number of y coordinates so as to form a substantially flat surface area). The outer surface O205 comprises a convex surface comprising in the posterior portion PP thereof a substantially bulged portion bulging along a first light direction D1 substantially perpendicular (e.g. at an angle between 80° and 100°) to the substantially flat surface area of the inner surface, wherein the bulged portion of the outer surface O205 is configured to focus the light rays emitted from the lighting element O101 in said first light direction D1.

Thus, the outer surface O205 comprises a second convex surface that, seen in a sagittal plane xz of the lens element, comprises in a superior posterior quadrant a substantially bulged portion bulging along the first direction D1 (see the direction with angle beta with respect to axis x, wherein beta is larger than 90 degrees) substantially perpendicular to the substantially flat surface area of the inner surface O204. The bulged portion of the outer surface O205 is configured to focus the light rays emitted from the lighting element in said first direction. The inner surface O204 may bulge in a second direction D2 oriented at an angle alpha with respect to the axis x, wherein alpha may be smaller than 90 degrees.

Preferably, the substantially flat surface area has a radius of curvature which is larger than 10cm, preferably larger than 20cm, more preferably larger than 50cm, preferably at least when measuring in an xz plane, and more preferably both when measuring in an xz plane and in an yz plane. Preferably, the substantially flat surface area extends over at least 20%, more preferably at least 30%, even more preferably at least 50 % of a maximum width of the cavity O203 measured in a second direction y perpendicular on the first direction x.

Preferably, the substantially bulged portion has a radius of curvature which is smaller than 10cm, preferably smaller than 5cm, more preferably smaller than 4cm, e.g. smaller than 2cm preferably at least when measuring in an xz plane, and more preferably both when measuring in an xz plane and in an yz plane. Preferably, a radius of curvature of the bulged portion is smaller than a radius of curvature of the outer surface O205 in the anterior portion AP and smaller than a radius of curvature of the inner surface O204 in the anterior portion AP.

Preferably, seen in the sagittal plane xz through the cavity, a lens surface area PA between in the inner surface O204 and the outer surface O205 in the posterior portion PP is at least 1.5 times higher than a lens surface area AA between in the inner surface and the outer surface in the anterior portion AP. In other words, on average the posterior portion PP of the lens element is thicker than the anterior portion AP. Preferably the thickness of the anterior portion AP is as small as possible, and more preferably smaller than 6mm.

Preferably, the profiles of the convex surface of the outer surface, as seen in a sagittal plane xz are substantially identical over at least 15%, more preferably at least 20%, even more preferably at least 25 % of a maximum width (a1) of the lens element measured in a second direction y perpendicular on the first direction x.

Preferably, the inner surface O204 bulges in the anterior portion AP, along a second direction D2 such as to decrease a portion of the light that exits the optical unit in the second direction D2, and/or the inner surface O204 comprises an opaque or diffusing surface in the anterior portion AP.

Fig. 10f illustrates a cut view in a coronal plane (in the yz plane, see also Fig. 10c) of a portion of the optical unit. The inner surface O204 comprises in a superior side quadrant a portion (see the portion from OX3 to OX4) for orienting the light into a third direction D3 (see direction with angle delta with respect to axis y). In this way, the light emitted by lighting elements O101, e.g. LED lighting elements which may be placed in the cavity O203 delimited by the lens elements, is shaped in the third direction D3 and may be used to form a light pattern, e.g. a strip light pattern, that is substantially focused in the coronal direction, e.g. is limited to a given lane. Such optical unit may hence be used in luminaires to issue light warnings adapted to the situation.

Preferably, the inner surface O204 has a first side portion SP1 and a second side portion SP2 seen in a second direction y perpendicular on the first direction x, and the outer surface O205 has a first side portion SP1 and a second side portion SP2 seen in the second direction y. Seen in a coronal plane yz extending in the second direction y, the first side portion SP1 of the inner and outer surface is different from the second side portion SP2 of the inner and outer surface and configured for orienting the light into a coronal light direction D3.

Preferably, as illustrated in Fig. 10f, seen in a coronal plane yz through the cavity O203, a lens surface area (SP1A) between in the inner surface O204 and the outer surface O205 in the first side portion SP1 is at least 1.5 times higher than a lens surface area (SP2A) between in the inner surface O204 and the outer surface O205 in the second side portion SP2.

Preferably, as illustrated in Fig. 10f, seen in a coronal plane yz through the cavity O203, the radius of curvature of the outer surface O205 of the first side portion SP1 is at least 5 times smaller, preferably at least 10 times smaller than the radius of curvature of the inner surface O204 of the first side portion SP1, measured where the coronal light direction D3 crosses the inner and the outer surface 0204, 0205.

The optical unit, e.g. a lens plate comprising several lens elements, is configured to shape the light rays emitted from lighting elements O101, e.g. LED lighting elements which may be placed in the cavities O203 delimited by the lens elements. Because the inner surface O204 has a substantially flat surface, the light rays emitted towards this substantially flat surface are slightly deviated into the first direction D1 by said surface. Additionally, the bulge of the outer surface O205, which is configured to focus the light rays in said first direction D1, also has a focusing property. The optical unit, which comprises a combination of these two features, is therefore configured such that the light emitted by the lighting elements O101 is shaped in the first direction D1 and may be used to form a substantially focused light pattern, *e.g.* a strip light pattern S. Such optical unit may hence be used in luminaires to issue light warnings adapted to the situation.

When seen in the sagittal plane, cf. Fig. 10d, the inner surface O204 of the optical unit may bulge in the superior anterior quadrant, along a second direction D2 (see direction with angle alpha with respect to axis x). In this way, the light emitted in the second direction from a lighting element O101, *e.g.* which may be disposed in the cavity O203 may be deviated such as to disperse the light rays and avoid that they propagate in this second direction D2. This has the advantage of decreasing the portion of the light that exits the optical unit in the second direction, thereby increasing the proportion of the light that exits the optical unit in the first direction and therefore increasing the contrast of the strip light pattern S.

Fig. 10e illustrates a perspective view of the lens element, wherein various contour lines of the inner and outer surface are visible. The outer contour OA1 of the lens element, measured at the lower edge of the outer surface O205, may delimit a substantially squared surface. The substantially squared surface OA1 may have rounded corners. Preferably a width dimension of the contour is between 80 and 100% of a length direction of the contour. The length of the side of OA1 may be a1. The sagittal profiles of the convex surface of the outer surface O205 are substantially identical in a central portion $\Delta y1$ of the lens element. Such sagittal profile is illustrated in Fig. 10f for y=0. Preferably, the central portion $\Delta y1$ of the lens element extends along at least 15%, more preferably at least 20 %, even more preferably at least 25% of the side dimension a1 of the outer surface O205 in the coronal direction (the axis y). In this way, the light emitted from a lighting element O101, *e.g.* which may be disposed in the cavity O203, may be shaped in a light pattern which may extend in a coronal direction y, creating thus an elongated light pattern.

The luminaire head illustrated in Fig. 7a and 7b may comprise an optical unit as illustrated in Figs. 10a-f for outputting a strip light pattern, and an additional optical unit for outputting an additional light pattern different from the strip light pattern. In a preferred embodiment the optical unit of Figs. 10a-f may be arranged in the embodiment of Fig. 7b in the most upstream position when looking in the travel direction.

Figs. 11a and 11b illustrate an Isolux diagrams of the light emitted by a luminaire head of the light system equipped with exemplary embodiments of an optical unit. More in particular, Fig. 11a illustrates a minimum area enclosing rectangle of a strip light pattern S, of length L and width W obtained with an optical element according to Figs. 10a-f . In the present case, the Isolux line with a value of at least 200 is enclosed in a rectangle with a length L at least 2.5 times as long as the width W thereof. The rectangle may be extending longitudinally at least across a portion of the width of the lane, when the light system is equipped with a luminaire head with such illustrated properties, thereby forming a strip light pattern to issue light warnings adapted to the situation. Fig 11b illustrates a minimum area enclosing rectangle of a strip light pattern S, of length L and width W obtained with an optical element according to a slightly modified optical element in which the light area external to strip light pattern has been further improved to reduce illumination noise. In particular, the (lowest) Isolux lines external to the light pattern and located in an area adjacent to the light strip pattern along the longitudinal direction of the strip light pattern were rendered substantially concentric and/or parallel with the short side of the strip light pattern. The shapes of the internal and external surfaces of the optical element of the second side portion SP2 were for instance modified compared to the optical unit of Figs. 10a-f to obtain the Isolux diagram of Figure 11b. Modifications of the optical unit disclosed in Figures 10a-10f, to improve for instance further the noise distribution, come thus within the scope of the present application as long as the concept of an optical unit comprising an inner and outer surface configured to focus light rays from a light element in a first direction to form a strip light pattern, applies.

As can be seen in Figs. 11a and 11b, at one length side of rectangle the illuminance drops rapidly from a value above 100 lux to a value of 5 lux. Preferably, this side is the side where the vehicles arrive, so that the driver will see a clear strip before him. In an exemplary embodiment, the light intensity drops more rapidly at a first length side L1 as compared to a second length side L2.

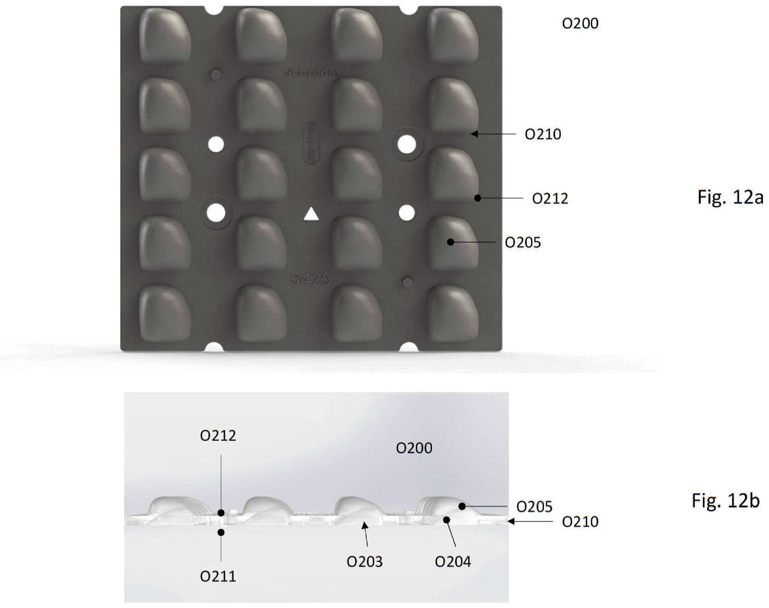

Figs. 12a and 12b illustrate an exemplary embodiment of a lens plate O200 comprising an array of lens elements similar to the lens element of Figs. 10a-f . The array is shown to comprise 4 x 5 lens elements, but the skilled person understands that any array of two or more lens elements may be used. Preferably, the array comprises at least 2 x 2 lens elements. The lens elements are oriented in the same manner to contribute to the desired light distribution. The lens plate O200 comprises an optical base 0210. The optical base 0210 may be essentially flat and may comprise an upper surface 0212 in an xy plane and a lower surface 211 parallel to the upper surface. Each one lens element is provided with an inner surface 204 and an outer surface O205 located on opposite sides thereof. The inner surface O204 is an at least partially convex surface delimiting a cavity O203 configured to accommodate a lighting element O101 (not shown).

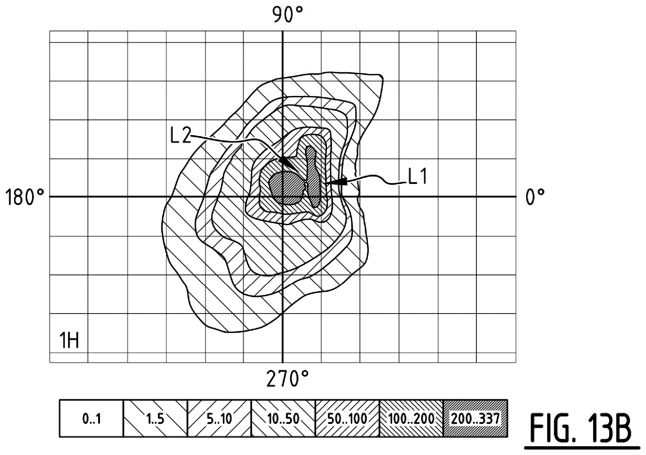

Fig. 13b is an isolux diagram of the light distribution of the lens plate of Fig. 12. More in particular, Fig. 13b illustrates a minimum area enclosing rectangle of a strip light pattern of length and width obtained with the lens plate of Figs. 12a and 12b, in a similar way as discussed above for Figs. 11a and 11b. In the present case, the Isolux line with a value of at least 200 is enclosed in a rectangle with a length at least 2.5 times as long as the width thereof. The rectangle may be extending longitudinally at least across a portion of the width of the lane,

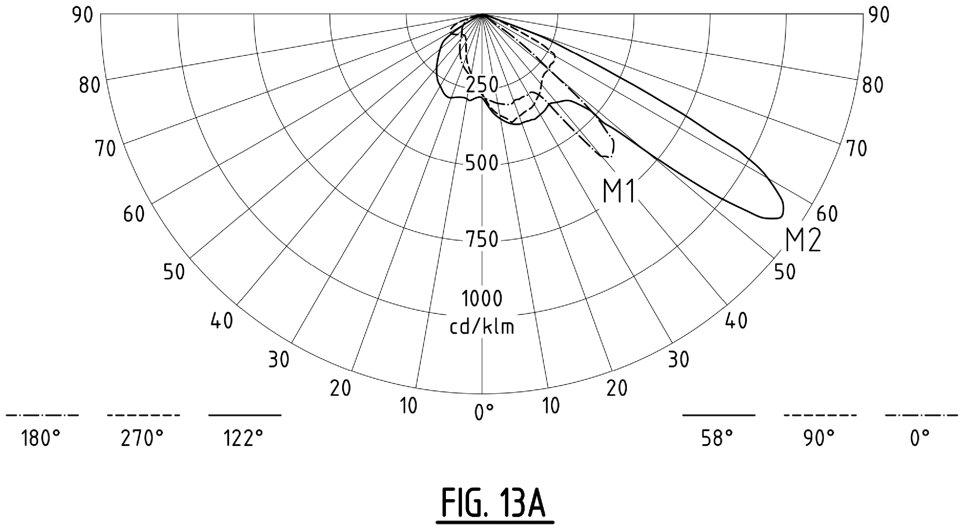

Fig. 13a is a polar diagram for different C planes of the light distribution of the lens plate of Fig. 12. It can be observed that the intensity shows a distinct maximum M1 at an angle between 40° and 50° in the C0-180 plane and a distinct maximum M2 at and angle between 50° and 60° in the C58-122 plane. Preferably, this maximum intensity occurs at an angle which increases from a first value between 0° and 50° to a second value between 50° and 90° as the C-plane is changed from C0-180 to C60-120.

Whilst the principles of the invention have been set out above in connection with specific embodiments, it is understood that this description is merely made by way of example and not as a limitation of the scope of protection which is determined by the appended claims.

Further examples may be defined by the following clauses:

**Clauses**

1. A lighting system for lighting a traffic surface (R), said system comprising:

- at least one luminaire (100A, 100A',100B,100B'), each luminaire comprising

  - at least one optical unit (110) configured for outputting light, and
  - a controller (120) configured for controlling the at least one optical unit (110) of that luminaire;

- at least one sensor (200) configured for sensing data related to an event in the vicinity of the traffic surface and/or a receiver for receiving data related to an event in the vicinity of the traffic surface;

wherein the lighting system is configured for determining the occurrence of an event in the vicinity of and/or on the traffic surface based on the sensed data and/or the received data; and

wherein the controller of the at least one luminaire is further configured for:

  - when the occurrence of an event has been determined, controlling the light output of the at least one optical unit (110) of the at least one luminaire (100A, 100A',100B, 100B') according to a first light configuration (C1) to form at least one strip light pattern (S1) on the traffic surface extending in a width direction substantially perpendicular to a predetermined direction of the traffic surface.

2. The system of clause 1, wherein an Isolux line of the controlled light output of an optical unit (110) substantially forming the strip light pattern is contained within a minimum area enclosing rectangle having a length and a width smaller than said length, said length extending longitudinally at least across a portion of a width of the traffic surface.

3. The system of the previous clause, wherein the length of the minimum area enclosing rectangle is at least 1,5 times as long as the width thereof, preferably 2 times as long as the width thereof, more preferably at least 2.5 times as long as the width thereof, even more preferably at least 3 times as long as the width thereof, e.g. at least 4 times as long as the width thereof.

4. The system of any one of the two previous clauses, wherein the Isolux line has a value of at least 100, more preferably of at least 150, even more preferably of at least 190.

5. The system of any of the foregoing clauses, wherein the strip light pattern has an average illuminance and/or a uniformity of illuminance adapted to be perceived by a traffic surface user as a strip of light with substantially defined edges at ground level.

6. The system of the previous clause, wherein the strip light pattern has a uniformity of illuminance of at least 30%, preferably at least 40%, more preferably at least 50%.

7. The system of any of the foregoing clauses, wherein the strip light pattern has an average illuminance at ground level at least 3 times, more preferably at least 4 times, higher than the average illuminance at ground level in an area at the immediate proximity of the strip light pattern.

8. The system of any of the foregoing clauses, wherein the at least one strip light pattern (S1) extends over at least 50% of a width of the traffic surface, said width being measured in the width direction which is substantially perpendicular to the direction of the traffic surface, preferably over at least 60% of said width, more preferably over at least 70% of said width, e.g. over at least 90% of said width.

9. The system of any of the foregoing clauses, wherein the at least one sensor and/or receiver is configured for sensing and/or receiving data related to the presence and/or the movement and/or the speed on the traffic surface or in the vicinity of the traffic surface of any one or more of the following: a vehicle, a pedestrian, an animal, a static object, a moving object.

10. The system of the above clause, wherein the at least one sensor and/or receiver is configured for sensing and/or receiving data related to the presence and/or the movement and/or the speed of a vehicle (V) on one or more lanes of the traffic surface and/or in the vicinity of one or more lanes of the traffic surface, wherein the at least one strip light pattern (S1) is formed on at least the one or more lanes where the at least one vehicle has been sensed.

11. The system of any of the foregoing clauses, wherein the at least one sensor and/or the receiver comprises one of the following: an optical sensor such as a photodetector, an image capturing means, such as a visible light camera or a thermal camera, a radar such as a Doppler effect radar, a LIDAR, a sound capturing means, a humidity sensor, an air quality sensor, a temperature sensor, a weather sensor, a visibility sensor, a movement detector, a motion sensor, an alarm device, an RF sensor, a noise sensor, a vibration sensor, a receiving means with an antenna configured to capture a sequence of signals, in particular a sequence of short-range signals, such as Bluetooth signals or any combination thereof.

12. The system of any of the foregoing clauses, where the at least one luminaire is located near a point of interest (PI), and the at least one sensor and/or the receiver are configured for sensing and/or receiving data related to an event in the vicinity of that point of interest and wherein the strip light pattern (S1) is formed upstream of the point of interest when looking in the direction of a movement on the traffic surface towards that point of interest.

13. The system of the previous clause, wherein the point of interest is any one of the following: a zebra crossing, a bike lane crossing, a traffic surface crossing, a stop, a school, a blind corner at the end of an aisle, any dangerous location on the traffic surface and/or in the vicinity of the traffic surface.

14. The system of any of the foregoing clauses, wherein controlling the light output according to the first light configuration (C1) further comprises forming an additional light pattern (P1) on the traffic surface distinct at least in shape from the strip light pattern (S1), and preferably also distinct in color and/or in a flashing pattern.

15. The system of any of the foregoing clauses, further comprising controlling the light output according to a second configuration (C2) different from the first configuration (C1).

16. The system of the above clause, wherein the controller is configured for controlling the light output according to the second light configuration (C2) by default in the absence of the determination of the occurrence of an event.

17. The system of clauses 14 and 15 or 16, wherein at least one light pattern (P2) of the second light configuration (C2) is different from the additional light pattern (P1) and from the strip light pattern (S1) of the first configuration (C1).

18. The system of the above clause, wherein the at least one pattern (P2) of the second light configuration (C2) differs from the additional light pattern (P1) of the first light configuration (C1) in at least one of:

- a light intensity,
- a flashing frequency,
- a light spectral frequency,
- a light distribution.

19. The system of any of the foregoing clauses, where the color of the light of the at least one strip light pattern (S1) is red, preferably with a wavelength between 610 and 740 nm, or blue, preferably with a wavelength between 439 and 480 nm.

20. The system of any of the foregoing clauses, wherein the lighting system is further configured to derive a type of event from the sensed data and/or the received data and where a color of the light of the at least one strip light pattern (S1) and/or the position of the at least one strip light pattern on the traffic surface is based on the type of event.

21. The system of any of the foregoing clauses, comprising a plurality of luminaires each having a controller configured for receiving respective information from the at least one respective sensor and/or respective receiver, and for controlling the light output of its respective one or more optical units based on the received respective information, in a coordinated manner with the controllers of the other luminaires.

22. The system of the above clause, wherein based on the received information, the controllers of the plurality of luminaires are configured for controlling the light output of the plurality of luminaires in a coordinated manner per travel direction.

23. The system of clause 21 or 22, wherein based on the received information, the controllers of the plurality of luminaires are configured for controlling the light output of the plurality of luminaires in a coordinated manner per lane of the traffic surface.

24. The system of any of the clauses 21-23, wherein upon the determination of the occurrence of an event associated with the traffic surface in a travel direction towards a point of interest, the controllers of at least two luminaires closest to the point of interest, placed upstream and/or downstream of the point of interest as seen in the travel direction, are configured for controlling their light output according to the first light configuration (C1).

25. The system of any of clauses 21-24 and clause 9, wherein the number of luminaires that are coordinated depends on the distance between the luminaires and/or the speed limit associated with the traffic surface in the vicinity of these luminaires and/or a sensed speed of a vehicle.

26. The system of clause 24 and 25, wherein the controllers of the at least two luminaires are further configured for controlling their light output such that the at least one strip light pattern does not extend on one or more lanes of the traffic surface not associated with the detected event.

27. The system of any of the foregoing clauses where the at least one optical unit comprises at least two optical units and the controller is configured for controlling the at least two optical units.

28. The system of any of the foregoing clauses, wherein each respective optical unit is configured for outputting a respective light pattern of one or more light configurations.

29. The system of any of the foregoing clauses, wherein the at least one luminaire comprises a first optical unit configured for outputting the strip light pattern (S1) of the first light configuration (C1) and a second optical unit configured for outputting an additional light pattern (P1) of the first light configuration (C1); wherein preferably the system further comprises a first driver associated to the first optical unit and a second driver associated to the second optical unit.

30. The system of the above clause and clause 15, wherein the second optical unit is further configured for outputting a light pattern (P2) of the second light configuration (C2), said light pattern (P2) being different from or the same as the additional light pattern (P1).

31. The system of any of the foregoing clauses 21-30, wherein each respective optical unit is configured for outputting one or more light patterns on a respective lane of the traffic surface.

32. The system of any of the foregoing clauses 21-31, wherein the controller is configured to communicate through wired communication and/or wireless communication with controllers of other luminaires and optionally with the at least one sensor and/or the receiver of other luminaires.

33. The system of any of the foregoing clauses, wherein the at least one sensor and/or the receiver is physically located in or on the at least one luminaire.

34. The system of any of the foregoing clauses, wherein the at least one sensor and/or receiver is located at a distance from the luminaire for detecting an event upstream or downstream of a point of interest in the direction of a movement along the traffic surface towards that point of interest.

35. The system of any of the foregoing clauses, wherein the at least one sensor and/or receiver is configured to communicate with the controller through wired and/or wireless communication.

**Claims**

1. An optical unit configured for outputting a strip light pattern, said optical unit comprising at least one lens element, wherein a lens element thereof is provided with an inner surface (O204) having an anterior portion (AP) and a posterior portion (PP) seen in a first direction (x) of the lens element and an outer surface (O205) having an anterior portion and a posterior portion seen in the first direction (x) of the lens element, said inner and outer surface being located on opposite sides of the lens element;

   - wherein the inner surface (O204) is an at least partially convex surface delimiting a cavity (O203) configured to accommodate a lighting element (O101);
   - wherein the inner surface (O204) comprises in the posterior portion thereof a substantially flat surface area (OX1-OX2); and
   - wherein the outer surface (O205) comprises a convex surface comprising in the posterior portion thereof a substantially bulged portion bulging along a first light direction (D1) substantially perpendicular to the flat surface area of the inner surface, the bulged portion of the outer surface being configured to focus the light rays emitted from the lighting element (O101) in said first light direction.

**2.** The optical unit of the previous claim, wherein the substantially flat surface area (OX1-OX2) has a radius of curvature which is larger than 10cm, preferably larger than 20cm, more preferably larger than 50cm.

**3.** The optical unit of claim 1 or 2, wherein the substantially bulged portion has a radius of curvature which is smaller than 10cm, preferably smaller than 5cm, more preferably smaller than 4cm, e.g. smaller than 2cm.

**4.** The optical unit of any one of the above claims , wherein, seen in a sagittal plane (xz) through the cavity extending in the first direction (x), a lens area (PA) between in the inner surface and the outer surface in the posterior portion is at least 1.5 times higher than a lens area (AA) between in the inner surface and the outer surface in the anterior portion.

**5.** The optical unit of any one of the above claims , wherein a radius of curvature of the bulged portion is smaller than a radius of curvature of the outer surface in the anterior portion and smaller than a radius of curvature of the inner surface in the anterior portion.

**6.** The optical unit of any one of the above claims, wherein the substantially flat surface area extends over at least 15%, more preferably at least 20%, even more preferably at least 25 % of a maximum width of the cavity measured in a second direction (y) perpendicular on the first direction (x).

**7.** The optical unit of any one of the above claims, wherein the profiles of the convex surface of the outer surface, as seen in a sagittal plane (xz) extending in the first direction (x), are substantially identical over at least 15%, more preferably at least 20%, even more preferably at least 25 % of a maximum width (a1) of the lens element measured in a second direction (y) perpendicular on the first direction (x).

**8.** The optical unit of any one of the above claims, wherein the inner surface (O204) has a first side portion (SP1) and a second side portion (SP2) seen in a second direction (y) perpendicular on the first direction (x), and the outer surface (O205) has a first side portion (SP1) and a second side portion (SP2) seen in the second direction (y); wherein, seen in a coronal plane (yz) extending in the second direction (y), the first side portion (SP1) of the inner and outer surface is different from the second side portion (SP2) of the inner and outer surface and configured for orienting the light into a coronal light direction (D3).

**9.** The optical unit of the previous claim, wherein, seen in a coronal plane (yz) through the cavity extending in the second direction (y), a lens area (SP1A) between in the inner surface and the outer surface in the first side portion is at least 1.5 times higher than a lens area (SP2A) between in the inner surface and the outer surface in the second side portion.

**10.** The optical unit of claim 8 or 9, wherein, seen in a coronal plane (yz) through the cavity extending in the second direction (y), the radius of curvature of the outer surface of the first side portion is at least 5 times smaller, preferably at least 10 times smaller than the radius of curvature of the inner surface of the first side portion, measured where the coronal light direction (D3) crosses the inner and the outer surface.

**11.** The optical unit of any of the above claims, wherein the inner surface bulges in the anterior portion, along a second direction (D2) such as to decrease a portion of the light that exits the optical unit in the second direction D2, and/or wherein the inner surface comprises an opaque or diffusing surface in the anterior portion.

**12.** A luminaire head comprising an optical unit according to any of the above claims for outputting a strip light pattern, and an additional optical unit for outputting an additional light pattern different from the strip light pattern.

FIG. 1

FIG. 2

FIG. 3

FIG. 4

FIG. 5A

FIG. 5B

EP 4 752 432 A2

**FIG. 6A**

**FIG. 6B**

**FIG. 6C**

FIG. 7A

FIG. 7B

FIG. 8

EP 4 752 432 A2

FIG. 9

SP1

AP

O212

PP

O210

O205

SP2

O211

z

y

x

**FIG. 10A**

O205

O204

O203

**FIG. 10B**

O205

O204

O203

**FIG. 10C**

FIG. 10D

FIG. 10E

FIG. 10F

FIG. 11A

FIG. 11B

Fig. 12a

Fig. 12b

FIG. 13A

FIG. 13B

REFERENCES CITED IN THE DESCRIPTION

**Patent documents cited in the description**

- EP 2021084638 W
- EP 2021084631 W
- EP 2018084516 W
- EP 2019056713 W
- EP 20190774380 W
- EP 2020082269 W
- EP 2022056270 W
- EP 2022071401 W
- WO 2019175435 A3
- WO 2019061879 A1
- WO 2020025427 A
- WO 2019134875 A1
- WO 2020136202 A1
- WO 2020136200 A1
- WO 2020136205 A1

- WO 2020136203 A1
- WO 2020136204 A1
- WO 2020136197 A1
- WO 2020136196 A1
- WO 2019020366 A1
- WO 2020165284 A1
- WO 2020173836 A1
- WO 2021130275 A1
- WO 19020366 A1
- WO 2020249684 A1
- WO 2020058282 A1
- WO 2021186058 A1
- NL 2025166
- WO 2022023441 A1